# EUROPEAN PATENT APPLICATION

(11) **EP 4 564 874 A1**
(43) Date of publication of application: **04.06.2025**
(21) Application number: 23849127.8
(22) Date of filing: 30.06.2023
(51) Int. Cl.: H04W 12/069

(54) **AUTHENTICATION METHOD, COMMUNICATION APPARATUS, AND SYSTEM**

(30) Priority: 04.08.2022 CN 202210931249
(71) Applicant: Huawei Technologies Co., Ltd., Shenzhen, Guangdong 518129 (CN)
(72) Inventor: LI, Kuikui, Shenzhen, Guangdong 518129 (CN); SUN, Fei, Shenzhen, Guangdong 518129 (CN); ZENG, Qinghai, Shenzhen, Guangdong 518129 (CN); LOU, Chong, Shenzhen, Guangdong 518129 (CN)
(74) Representative: Grünecker Patent- und Rechtsanwälte PartG mbB
(86) International application number: PCT/CN2023/104822
(87) International publication number: WO 2024/027417

(57) **Abstract**

Embodiments of this application provide an authentication method. The method includes: A radio access network device receives authentication request information from a relay device, where the authentication request information includes identity information of the relay device; and the radio access network device sends an authentication response, where the authentication response includes a result of performing authentication on the relay device. Technical solutions of this application can implement bidirectional authentication between a relay device and a network, and ensure that the relay device on which the network needs to perform authentication is authorized and the network on which the relay device needs to perform authentication for access is also authorized.

## Description

This application claims priority to Chinese Patent Application No. 202210931249.9, filed with the China National Intellectual Property Administration on August 4, 2022 and entitled "AUTHENTICATION METHOD, AND COMMUNICATION APPARATUS AND SYSTEM", which is incorporated herein by reference in its entirety.

### TECHNICAL FIELD

This application relates to the field of communication technologies, and more specifically, to an authentication method, and a communication apparatus and system.

### BACKGROUND

In a communication system, a radio frequency (radio frequency, RF) repeater is a non-regenerative relay node, can amplify and forward a received signal, and has low costs, a simple structure, easy deployment, and low power consumption. An RF repeater in a fifth generation mobile communication technology (5th generation mobile communication technology, 5G) may also be referred to as a new radio (new radio, NR) repeater. If a base station can control an NR repeater to perform "intelligent" amplification and forwarding, the NR repeater is referred to as a network-controlled repeater (network-controlled repeater, NCR) or a smart repeater (smart repeater, SR), or is referred to as a smart repeater.

Currently, there is a security problem in a connection between an NCR and a network or a base station. An unauthorized NCR device may access an operator network, or an NCR device may be used by an unauthorized network.

Therefore, how to implement a secure connection between an NCR and a network or a base station is a technical problem that needs to be urgently resolved currently.

### SUMMARY

This application provides an authentication method, a communication apparatus, and a system, to implement bidirectional authentication between an NCR and a base station or a network, and ensure that the NCR device on which the network or the base station needs to perform authentication is authorized and the network or the base station on which the NCR needs to perform authentication for access is also authorized.

According to a first aspect, an authentication method is provided. The method includes: A radio access network device receives authentication request information from a relay device, where the authentication request information includes identity information of the relay device; and the radio access network device sends an authentication response, where the authentication response includes a result of performing authentication on the relay device.

In the technical solution provided in this application, the radio access network device may perform authentication on the relay device based on the identity information of the relay device, to ensure that the accessing relay device is authorized, thereby improving network security.

Optionally, the authentication response may include a result indicating that the authentication on the relay device succeeds or a result indicating that the authentication on the relay device fails.

With reference to the first aspect, in some implementations of the first aspect, the identity information of the relay device includes a permanent identifier of the relay device or a concealed identifier obtained by encrypting the permanent identifier.

Optionally, the identity information of the relay device may include the permanent identifier of the relay device or the concealed identifier obtained by encrypting the permanent identifier, for example, a subscription permanent identifier (subscription permanent identifier, SUPI) or a subscription concealed identifier (subscription concealed identifier, SUCI).

In the technical solution provided in this application, the radio access network device may perform authentication on the relay device based on the identity information of the relay device, to ensure that the accessing relay device is authorized, thereby improving network security.

With reference to the first aspect, in some implementations of the first aspect, the identity information of the relay device includes any one or more of a temporary identifier and type indication information of the relay device, and the type indication information indicates that the relay device is a network-controlled repeater (network-controlled repeater, NCR).

Optionally, in addition to one or more of the temporary identifier and the type indication information of the relay device, the identity information of the relay device may further include the permanent identifier of the relay device or the concealed identifier obtained by encrypting the permanent identifier.

In the technical solution provided in this application, the radio access network device may perform authentication on the relay device based on the identity information of the relay device, to ensure that the accessing relay device is authorized, thereby improving network security.

With reference to the first aspect, in some implementations of the first aspect, the authentication request information is carried in any one or more of a radio resource control setup request message and a radio resource control setup complete message in a random access process.

Optionally, the authentication request information may be carried in any one or more of the radio resource control setup request (RRCSetupRequest, which is also referred to as Msg3) message and the radio resource control setup complete (RRCSetupComplete, which is also referred to as Msg5) message in the random access process.

For example, when the authentication request information is carried in the Msg3 message, a new value may be added to an establishment cause (establishment cause) information element (information element, IE). For example, an "ncr-MT-Access" IE indicates that an authentication request is initiated by a mobile terminal (mobile terminal, MT) module of the NCR. An "InitialUE-Identity" IE is used to carry identity information NCR-MT ID of the NCR, the identity information may be a temporary identifier, a permanent identifier, or a concealed identifier, and a value of an "ng-5G-S-TMSI-Part1" field is the NCR-MT ID.

For example, when the authentication request information is carried in the Msg5 message, an "ncr-NodeIndication" field is added to notify the radio access network device that a device that completes random access is the NCR-MT, and identity information of the NCR-MT may be included in the "InitialUE-Identity" IE of the Msg3.

In the technical solution provided in this application, the radio access network device may perform authentication on the relay device based on the identity information of the relay device, to ensure that the accessing relay device is authorized, thereby improving network security.

With reference to the first aspect, in some implementations of the first aspect, before the radio access network device sends the authentication response, the method further includes: The radio access network device sends the authentication request information to an operations, administration and maintenance (operations, administration and maintenance, OAM), where the OAM is configured to perform identity authentication on the relay device; and the radio access network device receives the authentication response from the OAM.

Optionally, a gNB may read the authentication request information, or may not read the authentication request information, and directly send the authentication request information to the OAM functional entity for authentication.

The OAM performs identity authentication and authorization on the NCR based on the identity information of the NCR in a first authentication request. 3GPP OAM functions include an authentication function. For details, refer to an existing OAM authentication procedure in TS 28.533. Details are not described in this application. After completing the authentication on the relay device, the OAM sends the authentication response to the radio access network device, where the authentication response includes the result indicating that the authentication on the relay device succeeds or fails.

The radio access network device determines, based on the result that is of performing authentication on the relay device and that is included in the authentication response, whether to allow access of the relay device, and forwards the authentication result to the relay device. If the authentication response includes the result indicating that the authentication on the relay device fails, the radio access network device rejects access of the relay device, and forwards the authentication failure result to the relay device. If the authentication response includes the result indicating that the authentication on the relay device succeeds, the radio access network device forwards the authentication success result to the relay device, and configures access of the relay device.

For example, the radio access network device is a 5G next-generation NodeB (next-generation NodeB, gNB), and the relay device is the NCR. After initial access of the relay device is completed, a central unit (central unit, CU) of the gNB needs to send indication information to a distributed unit (distributed unit, DU) of the gNB, to indicate that the device is the NCR. The indication information is carried in an F1 interface message between the CU and the DU, for example, is carried in a UE context setup request (UE context setup request) message. This is because a radio resource control (radio resource control, RRC) layer message carrying the NCR identity indication information is decapsulated, read, and processed by the CU, the DU does not know that an accessing device is the NCR device, and subsequently the DU needs to perform configuration for the NCR.

The OAM-based authentication manner provided in this application can protect security of the relay device and an operator network, and prevent an unauthorized device from accessing the operator network or prevent the relay device from being used by an unauthorized network, thereby improving network security.

With reference to the first aspect, in some implementations of the first aspect, the method further includes: The radio access network device obtains an authentication key of the relay device; the radio access network device generates first authentication information based on a first random number and the authentication key; the radio access network device sends the first random number to the relay device; the radio access network device receives second authentication information from the relay device; and the radio access network device compares the first authentication information with the second authentication information.

Optionally, the first random number may be generated by using a random number generator, or may be obtained in another manner. This is not limited in this application. Optionally, the radio access network device may obtain the authentication key of the relay device from the OAM.

It should be understood that the second authentication information is generated by the relay device based on the first random number sent by the radio access network device and the authentication key of the relay device. After receiving the second authentication information sent by the relay device, the radio access network device may compare the first authentication information with the second authentication information, to check whether the first authentication information is consistent with the second authentication information.

In a bidirectional authentication procedure on a radio access network (radio access network, RAN) side provided in this application, an authentication mode of key derivation by a core network is still used, an unauthorized relay device can be removed, only a RAN function needs to be enhanced, and participation of the core network is not required, thereby avoiding upgrade of a function of a core network element.

With reference to the first aspect, in some implementations of the first aspect, the method further includes: If the first authentication information is consistent with the second authentication information, the radio access network device allows access of the relay device; or if the first authentication information is inconsistent with the second authentication information, the radio access network device rejects access of the relay device.

For example, the first authentication information is an expected response (expected response, XRES), and the second authentication information is a response (response, RES). If the RES is different from the XRES, verification fails, the relay device is not allowed to access the radio access network device, and information about the relay device is added to a blocklist. If the RES is the same as the XRES, verification succeeds, and the radio access network device continues to perform a subsequent configuration procedure.

In a bidirectional authentication procedure on a RAN side provided in this application, an authentication mode of key derivation by a core network is still used, an unauthorized relay device can be removed, only a RAN function needs to be enhanced, and participation of the core network is not required, thereby avoiding upgrade of a function of a core network element.

With reference to the first aspect, in some implementations of the first aspect, the method further includes: The radio access network device generates third authentication information based on a plurality of second random numbers and the authentication key; and the radio access network device sends the third authentication information and the plurality of second random numbers to the relay device.

For example, the third authentication information is a message authentication code (message authentication code, MAC), and the MAC may be calculated by using an f1 algorithm based on the authentication key of the relay device and the plurality of second random numbers. The radio access network device sends the MAC and the plurality of second random numbers to the relay device, so that the relay device performs authentication on the radio access network device.

In a bidirectional authentication procedure on a RAN side provided in this application, an authentication mode of key derivation by a core network is still used, an unauthorized network device can be removed, only a RAN function needs to be enhanced, and participation of the core network is not required, thereby avoiding upgrade of a function of a core network element.

With reference to the first aspect, in some implementations of the first aspect, the method further includes: The radio access network device receives device certificate information of the relay device; and the radio access network device performs authentication on the relay device based on the device certificate information.

For example, the device certificate information may include a preset device certificate, a public key of the relay device, device information, and a signature of a private key of the relay device on the device certificate.

According to the method provided in this embodiment of this application, the authentication can be completed based on the device certificate information of the relay device, and an unauthorized relay device can be removed, so that an operator and a device vendor can implement authentication by using private signaling without participation of a core network, thereby avoiding upgrade of a function of a core network element.

With reference to the first aspect, in some implementations of the first aspect, the method further includes: A central unit CU of the radio access network device sends type indication information to a distributed unit DU of the radio access network device, where the type indication information indicates that the relay device is the NCR.

After initial access of the relay device is completed, the central unit of the radio access network device needs to send indication information to the distributed unit, to indicate that the relay device is the NCR. The indication information is carried in an F1 interface message between the CU and the DU, for example, is carried in a UE context setup request message. This is because an RRC layer message carrying the NCR identity indication information is decapsulated, read, and processed by the CU, the DU does not know that an accessing device is the NCR device, and subsequently the DU needs to perform configuration for the NCR.

The authentication manner provided in this application can protect security of the relay device and an operator network, and prevent an unauthorized device from accessing the operator network or prevent the relay device from being used by an unauthorized network, thereby improving network security.

According to a second aspect, an authentication method is provided. The method includes: A relay device sends authentication request information to a radio access network device, where the authentication request information includes identity information of the relay device; and the relay device receives an authentication response, where the authentication response includes a result of performing authentication on the relay device.

In the technical solution provided in this application, the radio access network device may perform authentication on the relay device based on the identity information sent by the relay device, to ensure that the accessing relay device is authorized, thereby improving network security.

Optionally, the authentication response may include a result indicating that the authentication on the relay device succeeds or a result indicating that the authentication on the relay device fails.

With reference to the first aspect, in some implementations of the first aspect, the identity information of the relay device includes a permanent identifier of the relay device or a concealed identifier obtained by encrypting the permanent identifier.

Optionally, the identity information of the relay device may include the permanent identifier of the relay device or the concealed identifier obtained by encrypting the permanent identifier, for example, an SUPI or an SUCI.

In the technical solution provided in this application, the radio access network device may perform authentication on the relay device based on the identity information of the relay device, to ensure that the accessing relay device is authorized, thereby improving network security.

With reference to the second aspect, in some implementations of the second aspect, the identity information of the relay device includes any one or more of a temporary identifier and type indication information of the relay device, and the type indication information indicates that the relay device is an NCR.

Optionally, in addition to one or more of the temporary identifier and the type indication information of the relay device, the identity information of the relay device may further include the permanent identifier of the relay device or the concealed identifier obtained by encrypting the permanent identifier.

In the technical solution provided in this application, the radio access network device may perform authentication on the relay device based on the identity information of the relay device, to ensure that the accessing relay device is authorized, thereby improving network security.

With reference to the second aspect, in some implementations of the second aspect, the authentication request information is carried in any one or more of a radio resource control setup request message and a radio resource control setup complete message in a random access process.

Optionally, the authentication request information may be carried in any one or more of an Msg3 message and an Msg5 message in the random access process.

For example, when the authentication request information is carried in the Msg3 message, a new value may be added to an establishment cause IE. For example, an "ncr-MT-Access" IE indicates that an authentication request is initiated by an MT module of the NCR. An "InitialUE-Identity" IE is used to carry identity information NCR-MT ID of the NCR, the identity information may be a temporary identifier, a permanent identifier, or a concealed identifier, and a value of an "ng-5G-S-TMSI-Part1" field is the NCR-MT ID.

For example, when the authentication request information is carried in the Msg5 message, an "ncr-NodeIndication" field is added to notify the radio access network device that a device that completes random access is the NCR-MT, and identity information of the NCR-MT may be included in the "InitialUE-Identity" IE of the Msg3.

In the technical solution provided in this application, the radio access network device may perform authentication on the relay device based on the identity information of the relay device, to ensure that the accessing relay device is authorized, thereby improving network security.

With reference to the second aspect, in some implementations of the second aspect, the method further includes: The relay device receives a first random number from the radio access network device; the relay device generates second authentication information based on the first random number and an authentication key of the relay device; and the relay device sends the second authentication information to the radio access network device.

It should be understood that, after receiving the first random number sent by the radio access network device, the relay device may generate the second authentication information based on the first random number and the authentication key of the relay device. After receiving the second authentication information sent by the relay device, the radio access network device may compare the first authentication information with the second authentication information, to check whether the first authentication information is consistent with the second authentication information.

Optionally, if the first authentication information is consistent with the second authentication information, the radio access network device allows access of the relay device; or if the first authentication information is inconsistent with the second authentication information, the radio access network device rejects access of the relay device.

For example, the first authentication information is an XRES, and the second authentication information is an RES. If the RES is different from the XRES, verification fails, the relay device is not allowed to access the radio access network device, and information about the relay device is added to a blocklist. If the RES is the same as the XRES, verification succeeds, and the radio access network device continues to perform a subsequent configuration procedure.

In a bidirectional authentication procedure on a RAN side provided in this application, an authentication mode of key derivation by a core network is still used, an unauthorized relay device can be removed, only a RAN function needs to be enhanced, and participation of the core network is not required, thereby avoiding upgrade of a function of a core network element.

With reference to the second aspect, in some implementations of the second aspect, the method further includes: The relay device receives third authentication information and a plurality of second random numbers from the radio access network device; the relay device generates fourth authentication information based on the plurality of second random numbers and the authentication key; and the relay device compares the third authentication information with the fourth authentication information.

It should be understood that, after receiving the third authentication information and the plurality of second random numbers from the radio access network device, the relay device may generate the fourth authentication information based on the plurality of second random numbers and the authentication key of the relay device. For example, the fourth authentication information is a MAC, and the MAC may be calculated by using an f1 algorithm based on the authentication key of the relay device and the plurality of second random numbers.

Optionally, if the third authentication information is consistent with the fourth authentication information, the authentication on the radio access network device succeeds; or if the third authentication information is inconsistent with the fourth authentication information, the authentication on the radio access network device fails.

The relay device compares the third authentication information with the fourth authentication information. If the third authentication information is different from the fourth authentication information, verification fails, the relay device rejects access to the radio access network device and a current cell, and adds an identity document (identity document, ID) of the radio access network device and/or an ID of the current cell to a blocklist, or marks the ID of the radio access network device and/or the ID of the cell in historical cell information, and the relay device re-initiates an initial access procedure. It should be understood that the relay device may obtain the ID of the radio access network device and the ID of the cell in a random access process. If the third authentication information is the same as the fourth authentication information, verification succeeds, that is, the authentication on the radio access network device succeeds.

In a bidirectional authentication procedure on a RAN side provided in this application, an authentication mode of key derivation by a core network is still used, an unauthorized network device can be removed, only a RAN function needs to be enhanced, and participation of the core network is not required, thereby avoiding upgrade of a function of a core network element.

With reference to the second aspect, in some implementations of the second aspect, the method further includes: The relay device sends device certificate information of the relay device to the radio access network device.

For example, the device certificate information may include a preset device certificate, a public key of the relay device, device information, and a signature of a private key of the relay device on the device certificate. The relay device sends the device certificate information to the radio access network device, so that the radio access network device performs authentication on the relay device.

According to the method provided in this embodiment of this application, the authentication can be completed based on the device certificate information of the relay device, and an unauthorized relay device can be removed, so that an operator and a device vendor can implement authentication by using private signaling without participation of a core network, thereby avoiding upgrade of a function of a core network element.

According to a third aspect, an authentication method is provided. The method includes: A core network device receives authentication request information from a relay device, where the authentication request information includes identity information of the relay device; and the core network device sends an authentication response to the relay device, where the authentication response includes a result of performing authentication on the relay device by the core network.

In this embodiment of this application, the relay device may use an authentication manner of a terminal device. For example, the 5G authentication and key agreement (authentication and key agreement, AKA) protocol or the extensible authentication protocol-authentication and key agreement (extensible authentication protocol-authentication and key agreement, EAP-AKA) protocol may be used for authentication. A non-access stratum (non-access stratum, NAS) message is transparently transmitted between the relay device and a core network unified data management (unified data management, UDM) network element, an authentication server function (authentication server function, AUSF) network element, or an access and mobility management function (access and mobility management function, AMF) network element through a radio access network device, to complete bidirectional authentication.

The user equipment (user equipment, UE)-based authentication manner provided in this application can protect security of the relay device and an operator network, and prevent an unauthorized device from accessing the operator network or the relay device from being used by an unauthorized network, thereby improving network security.

With reference to the third aspect, in some implementations of the third aspect, the identity information of the relay device includes a permanent identifier of the relay device or a concealed identifier obtained by encrypting the permanent identifier.

Optionally, the identity information of the relay device may include the permanent identifier of the relay device or the concealed identifier obtained by encrypting the permanent identifier, for example, an SUPI or an SUCI.

The UE-based authentication manner provided in this application can protect security of the relay device and an operator network, and prevent an unauthorized device from accessing the operator network or the relay device from being used by an unauthorized network, thereby improving network security.

With reference to the third aspect, in some implementations of the third aspect, the identity information of the relay device includes any one or more of a temporary identifier and type indication information of the relay device, and the type indication information indicates that the relay device is an NCR.

Optionally, in addition to one or more of the temporary identifier and the type indication information of the relay device, the identity information of the relay device may further include the permanent identifier of the relay device or the concealed identifier obtained by encrypting the permanent identifier.

The UE-based authentication manner provided in this application can protect security of the relay device and an operator network, and prevent an unauthorized device from accessing the operator network or the relay device from being used by an unauthorized network, thereby improving network security. In addition, main authentication steps are performed according to an existing authentication procedure, thereby reducing impact on a current protocol.

With reference to the third aspect, in some implementations of the third aspect, the authentication request information is carried in any one or more of a radio resource control setup request message and a radio resource control setup complete message in a random access process.

Optionally, the authentication request information may be carried in any one or more of an Msg3 message and an Msg5 message in the random access process.

For example, when the authentication request information is carried in the Msg3 message, a new value may be added to an establishment cause IE. For example, an "ncr-MT-Access" IE indicates that an authentication request is initiated by an MT module of the NCR. An "InitialUE-Identity" IE is used to carry identity information NCR-MT ID of the NCR, the identity information may be a temporary identifier, a permanent identifier, or a concealed identifier, and a value of an "ng-5G-S-TMSI-Part1" field is the NCR-MT ID.

For example, when the authentication request information is carried in the Msg5 message, an "ncr-NodeIndication" field is added to notify the radio access network device that a device that completes random access is the NCR-MT, and identity information of the NCR-MT may be included in the "InitialUE-Identity" IE of the Msg3.

The UE-based authentication manner provided in this application can protect security of the relay device and an operator network, and prevent an unauthorized device from accessing the operator network or the relay device from being used by an unauthorized network, thereby improving network security.

With reference to the third aspect, in some implementations of the third aspect, the method further includes: If the authentication response includes a result indicating that the authentication on the relay device succeeds, the core network sends type indication information to the radio access network device, where the type indication information indicates that the relay device is the NCR.

It should be understood that, because the radio access network device may not be able to read the NAS message, after NCR authentication succeeds, the core network needs to send the authentication response to the radio access network device, to notify the radio access network device that an accessed device is the NCR.

Optionally, after the authentication between the core network and the NCR is completed, the core network may notify, in a plurality of manners, the radio access network device that the authenticated device is the NCR device. For example, the core network element AMF or AUSF sends the authentication response to a gNB, to notify the gNB that the authenticated device is the NCR device.

Alternatively, the UDM may obtain subscription information of the NCR based on the SUPI of the NCR, and learn, by using the subscription information, that the accessed device is the NCR device. Then, the UDM sends the authentication response to the AMF, and the AMF forwards the authentication response to the radio access network device, to indicate that the authenticated device is the NCR device.

Alternatively, the UDM first sends the authentication response to the AUSF, the AUSF forwards the authentication response to the AMF, and then the AMF sends the authentication response to the radio access network device, to notify the radio access network device that the authenticated device is the NCR device.

It should be understood that the authentication response that carries the NCR identity indication information is read and processed by a CU of the radio access network device. Therefore, after initial access of the NCR is completed, the CU needs to send indication information to a DU, to indicate that the accessing device is the NCR, so that the DU performs configuration for the NCR. The NCR identity indication information is carried in an F1 interface message between the CU and the DU, for example, may be carried in a UE context setup request message.

The UE-based core network authentication manner provided in this embodiment of this application can protect security of the NCR device and an operator network, and prevent an unauthorized device from accessing the operator network or the NCR device from being used by an unauthorized network.

According to a fourth aspect, an authentication method is provided. The method includes: A relay device sends authentication request information to a core network, where the authentication request information includes identity information of the relay device; and the relay device receives an authentication response, where the authentication response includes a result of performing authentication on the relay device by the core network.

In this embodiment of this application, the relay device may use an authentication manner of a terminal device. For example, the 5G AKA protocol or the EAP-AKA protocol may be used for authentication. A NAS message is transparently transmitted between the relay device and a core network element UDM, AUSF, or AMF through a radio access network device, to complete bidirectional authentication.

The UE-based authentication manner provided in this application can protect security of the relay device and an operator network, and prevent an unauthorized device from accessing the operator network or the relay device from being used by an unauthorized network, thereby improving network security.

With reference to the fourth aspect, in some implementations of the fourth aspect, the identity information of the relay device includes a permanent identifier of the relay device or a concealed identifier obtained by encrypting the permanent identifier.

Optionally, the identity information of the relay device may include the permanent identifier of the relay device or the concealed identifier obtained by encrypting the permanent identifier, for example, an SUPI or an SUCI.

The UE-based authentication manner provided in this application can protect security of the relay device and an operator network, and prevent an unauthorized device from accessing the operator network or the relay device from being used by an unauthorized network, thereby improving network security.

With reference to the fourth aspect, in some implementations of the fourth aspect, the identity information of the relay device includes any one or more of a temporary identifier and type indication information of the relay device, and the type indication information indicates that the relay device is an NCR.

Optionally, in addition to one or more of the temporary identifier and the type indication information of the relay device, the identity information of the relay device may further include the permanent identifier of the relay device or the concealed identifier obtained by encrypting the permanent identifier.

The UE-based authentication manner provided in this application can protect security of the relay device and an operator network, and prevent an unauthorized device from accessing the operator network or the relay device from being used by an unauthorized network, thereby improving network security.

With reference to the fourth aspect, in some implementations of the fourth aspect, the authentication request information is carried in any one or more of a radio resource control setup request message and a radio resource control setup complete message in a random access process.

Optionally, the authentication request information may be carried in any one or more of an Msg3 message and an Msg5 message in the random access process.

For example, when the authentication request information is carried in the Msg3 message, a new value may be added to an establishment cause IE. For example, an "ncr-MT-Access" IE indicates that an authentication request is initiated by an MT module of the NCR. An "InitialUE-Identity" IE is used to carry identity information NCR-MT ID of the NCR, the identity information may be a temporary identifier, a permanent identifier, or a concealed identifier, and a value of an "ng-5G-S-TMSI-Part1" field is the NCR-MT ID.

For example, when the authentication request information is carried in the Msg5 message, an "ncr-NodeIndication" field is added to notify the radio access network device that a device that completes random access is the NCR-MT, and identity information of the NCR-MT may be included in the "InitialUE-Identity" IE of the Msg3.

The UE-based authentication manner provided in this application can protect security of the relay device and an operator network, and prevent an unauthorized device from accessing the operator network or the relay device from being used by an unauthorized network, thereby improving network security.

According to a fifth aspect, an authentication method is provided. The method includes: A relay device sends a first random number to a radio access network device; the relay device receives a first response number from the radio access network device; and the relay device performs verification on the first response number based on a public key of the radio access network device.

Optionally, the first response number may be generated by the relay device by using a random number generator, or the first random number may be preconfigured, or the first random number may be obtained from a reliable third party. A specific manner of obtaining the first random number is not limited in this application.

The relay device sends the first random number to the radio access network device. Optionally, the relay device may further simultaneously send any one or more of a public key S2 of the relay device and an authentication manner indication to the radio access network device. It should be understood that the authentication manner indication includes a unidirectional authentication indication and a bidirectional authentication indication.

For example, the first random number, the public key S2, and the authentication manner indication may be carried in an RRCSetupRequest message.

After receiving the first random number sent by the relay device, the radio access network device may generate the first response number based on the first random number and a private key G1 of the radio access network device. For example, the radio access network device may scramble or encrypt the first random number by using G1, to obtain the first response number. The relay device performs authentication on the radio access network device based on the first response number.

Optionally, if the first random number can be obtained through the verification, authentication on the radio access network device succeeds; or if the first random number cannot be obtained through the verification, authentication on the radio access network device fails.

For example, the relay device performs verification on the first response number by using a public key G2 of the radio access network device. Specifically, the relay device descrambles or decrypts the first response number by using the public key G2. If the first random number can be obtained, it indicates that the verification succeeds; otherwise, the verification fails. If the verification fails, it is considered that the authentication on the radio access network device fails, the relay device rejects access to the radio access network device and a current cell, and adds an ID of the radio access network device and/or an ID of the cell to a blocklist, or marks the ID of the radio access network device and/or the ID of the cell in historical cell information, and the relay device re-initiates an initial access procedure. It should be understood that the relay device may obtain the ID of the radio access network device and the ID of the cell in a random access process.

According to a mechanism of bidirectional authentication between the relay device and the radio access network device on a RAN side provided in this embodiment of this application, an unauthorized relay device and an unauthorized radio access network device can be removed. In addition, an authentication procedure on the RAN side is simple, and authentication and initial access of the relay device can be quickly completed without participation of a core network, thereby avoiding upgrade of a function of a core network element.

With reference to the fifth aspect, in some implementations of the fifth aspect, the first random number is carried in a radio resource control setup request message in a random access process.

Optionally, the first random number may be carried in an Msg3 message in the random access process.

According to a mechanism of bidirectional authentication between the relay device and the radio access network device on a RAN side provided in this embodiment of this application, an unauthorized relay device and an unauthorized radio access network device can be removed. In addition, an authentication procedure on the RAN side is simple, and authentication and initial access of the relay device can be quickly completed without participation of a core network, thereby avoiding upgrade of a function of a core network element.

With reference to the fifth aspect, in some implementations of the fifth aspect, the method further includes: The relay device sends a second response number to the radio access network device, where the second response number is generated based on the first response number and a private key of the relay device; and the relay device receives an authentication response, where the authentication response includes a result of performing authentication on the relay device by the radio access network.

The relay device may generate the second response number based on the first response number and the private key S1 of the relay device. For example, the relay device may scramble or encrypt the first response number by using the private key S1 of the relay device, to obtain the second response number. The second response number is used by the radio access network device to perform authentication on the relay device.

For example, the second response number may be carried in an RRCSetupComplete message. After receiving the second response number, the radio access network device may perform verification on the second response number by using the public key S2 of the relay device. Specifically, the radio access network device descrambles or decrypts the second response number by using the public key S2. If the first response number can be obtained, it indicates that the verification succeeds; otherwise, the verification fails.

According to a mechanism of bidirectional authentication between the relay device and the radio access network device on a RAN side provided in this embodiment of this application, an unauthorized relay device and an unauthorized radio access network device can be removed. In addition, an authentication procedure on the RAN side is simple, and authentication and initial access of the relay device can be quickly completed without participation of a core network, thereby avoiding upgrade of a function of a core network element.

With reference to the fifth aspect, in some implementations of the fifth aspect, before the relay device performs verification on the first response number based on the public key of the radio access network device, the method further includes: The relay device receives a first identity hash value from the radio access network device, where the first identity hash value is an identity hash value of the radio access network device; and the relay device determines that the first identity hash value exists in a blockchain network, where the blockchain network is used to manage identity information of the radio access network device.

For example, blockchain controllers may be introduced to the relay device and the radio access network device. It should be understood that, in the blockchain network, a third-party identity provider manages and controls an identity of a user performing registration on the blockchain. The relay device and the radio access network device perform registration on the blockchain as clients, and generate private-public key pairs.

It should be understood that the identity hash value of the radio access network device may be generated when the radio access network device performs registration on the blockchain network, and the first identity hash value is stored on the blockchain, that is, the identity hash value of the radio access network device may be found on the blockchain.

After receiving the first identity hash value sent by the radio access network device, the relay device first performs query on the blockchain based on the first identity hash value, to determine whether the radio access network device actually exists. If the first identity hash value can be found on the blockchain, it indicates that the radio access network device actually exists. If the first identity hash value cannot be found on the blockchain, it indicates that the radio access network device does not exist.

If the radio access network device actually exists, the relay device performs verification on the first response number by using the public key G2 of the radio access network device.

In this embodiment of this application, a blockchain function is introduced into a RAN architecture, to implement bidirectional authentication based on blockchain authentication, so that a security risk problem of conventional authentication can be overcome, an unauthorized device can be removed, and a core network does not need to participate in authentication, thereby avoiding upgrade of a function of a core network element.

With reference to the fifth aspect, in some implementations of the fifth aspect, the method further includes: The relay device sends a second identity hash value to the radio access network device, where the second identity hash value is an identity hash value of the relay device.

The relay device may send the identity hash value of the relay device to the radio access network device. It should be understood that the identity hash value of the relay device may be generated when the relay device performs registration on the blockchain network, and the second identity hash value is stored on the blockchain, that is, the second identity hash value may be found on the blockchain.

Optionally, the relay device may further simultaneously send the public key S2 of the relay device to the radio access network device.

Optionally, the second identity hash value and the public key S2 of the relay device may be used as a RAN intelligent controller (RAN intelligent controller, RIC) container, and are carried in an RRCSetupRequest message.

In this embodiment of this application, a blockchain function is introduced into a RAN architecture, to implement bidirectional authentication based on blockchain authentication, so that a security risk problem of conventional authentication can be overcome, an unauthorized device can be removed, and a core network does not need to participate in authentication, thereby avoiding upgrade of a function of a core network element.

In the method according to any one of the fifth aspect and the possible implementations of the fifth aspect, the relay device and the radio access network device may pre-obtain respective private keys and public keys of each other. The following manners may be used in addition to a manner of sending the public keys to each other:
In a possible manner, the radio access network device and the relay device preconfigure authentication information, where the authentication information includes the respective private keys of the radio access network device and the relay device. Alternatively, certificates issued by an operator are pre-installed, where the certificates include the respective private keys of the radio access network device and the relay device, and optionally may further include the public keys of each other.

In a possible manner, an OAM may preconfigure the private key S1 and the public key S2 of the relay device for the relay device. Optionally, the OAM may further preconfigure the public key G2 of the radio access network device for the relay device. Likewise, the OAM may preconfigure the private key G1 and the public key G2 of the radio access network device for the radio access network device. Optionally, the OAM may further preconfigure the public key S2 of the relay device for the radio access network device.

In a possible manner, the relay device may apply to the OAM for the private key S1 and the public key S2, and optionally may further apply to the OAM for the public key G2 of the radio access network device. Likewise, the radio access network device may apply to the OAM for the private key G1 and the public key G2, and optionally may further apply to the OAM for the public key S2 of the relay device.

In a possible manner, a network management device, which is referred to as a network management, helps the radio access network device obtain a certificate of the radio access network device, helps the relay device obtain a certificate of the relay device, provides the public key G2 of the radio access network device for the relay device, and provides the public key S2 of the relay device for the radio access network device.

According to a sixth aspect, an authentication method is provided. The method includes: A radio access network device receives a first random number from a relay device; and the radio access network device sends a first response number to the relay device, where the first response number is generated based on a private key of the radio access network device and the first random number.

Optionally, the first response number may be generated by the relay device by using a random number generator, or the first random number may be preconfigured, or the first random number may be obtained from a reliable third party. A specific manner of obtaining the first random number is not limited in this application.

After receiving the first random number sent by the relay device, the radio access network device may generate the first response number based on the first random number and the private key G1 of the radio access network device. For example, the radio access network device may scramble or encrypt the first random number by using G1, to obtain the first response number.

The relay device performs authentication on the radio access network device based on the first response number. For example, the relay device performs verification on the first response number by using a public key G2 of the radio access network device. Specifically, the relay device descrambles or decrypts the first response number by using the public key G2. If the first random number can be obtained, it indicates that the verification succeeds; otherwise, the verification fails. If the verification fails, it is considered that the authentication on the radio access network device fails, the relay device rejects access to the radio access network device and a current cell, and adds an ID of the radio access network device and/or an ID of the cell to a blocklist, or marks the ID of the radio access network device and/or the ID of the cell in historical cell information, and the relay device re-initiates an initial access procedure. It should be understood that the relay device may obtain the ID of the radio access network device and the ID of the cell in a random access process.

According to a mechanism of bidirectional authentication between the relay device and the radio access network device on a RAN side provided in this embodiment of this application, an unauthorized relay device and an unauthorized radio access network device can be removed. In addition, an authentication procedure on the RAN side is simple, and authentication and initial access of the relay device can be quickly completed without participation of a core network, thereby avoiding upgrade of a function of a core network element.

With reference to the sixth aspect, in some implementations of the sixth aspect, the first random number is carried in a radio resource control setup request message in a random access process.

Optionally, the first random number may be carried in an Msg3 message in the random access process.

According to a mechanism of bidirectional authentication between the relay device and the radio access network device on a RAN side provided in this embodiment of this application, an unauthorized relay device and an unauthorized radio access network device can be removed. In addition, an authentication procedure on the RAN side is simple, and authentication and initial access of the relay device can be quickly completed without participation of a core network, thereby avoiding upgrade of a function of a core network element.

With reference to the sixth aspect, in some implementations of the sixth aspect, the method further includes: The radio access network device receives a second response number from the relay device; the radio access network device performs verification on the second response number based on a public key of the relay device; and the radio access network device sends an authentication response to the relay device, where the authentication response includes a result of performing authentication on the relay device by the radio access network.

The second response number is generated by the relay device based on the first response number and a private key S1 of the relay device. For example, the relay device may scramble or encrypt the first response number by using the private key S1, to obtain the second response number, and then send the second response number to the radio access network device, so that the radio access network device performs authentication on the relay device.

Optionally, if the first response number can be obtained through the verification, the radio access network device allows access of the relay device; or if the first response number cannot be obtained through the verification, the radio access network device rejects access of the relay device.

For example, the radio access network device performs verification on the second response number by using the public key S2 of the relay device. Specifically, the radio access network device descrambles or decrypts the second response number by using the public key S2. If the first response number can be obtained, it indicates that the verification succeeds; otherwise, the verification fails. If the verification fails, it is considered that the authentication on the relay device fails, and the radio access network device rejects access of the relay device, sends the authentication response to notify the relay device that authentication fails, and adds an ID of the relay device to a blocklist. If the verification by using the public key S2 succeeds, the radio access network device sends the authentication response to the relay device, to notify the relay device that authentication succeeds.

For example, the authentication response may be carried in a radio resource control reconfiguration (RRCReconfiguration) message.

According to a mechanism of bidirectional authentication between the relay device and the radio access network device on a RAN side provided in this embodiment of this application, an unauthorized relay device and an unauthorized radio access network device can be removed. In addition, an authentication procedure on the RAN side is simple, and authentication and initial access of the relay device can be quickly completed without participation of a core network, thereby avoiding upgrade of a function of a core network element.

With reference to the sixth aspect, in some implementations of the sixth aspect, the method further includes: The radio access network device sends a first identity hash value to the relay device, where the first identity hash value is an identity hash value of the radio access network device.

For example, blockchain controllers may be introduced to the relay device and the radio access network device. It should be understood that, in the blockchain network, a third-party identity provider manages and controls an identity of a user performing registration on the blockchain. The relay device and the radio access network device perform registration on the blockchain as clients, and generate private-public key pairs.

It should be understood that the identity hash value of the radio access network device may be generated when the radio access network device performs registration on the blockchain network, and the first identity hash value is stored on the blockchain, that is, the identity hash value of the radio access network device may be found on the blockchain.

After receiving the first identity hash value sent by the radio access network device, the relay device first performs query on the blockchain based on the first identity hash value, to determine whether the radio access network device actually exists. If the first identity hash value can be found on the blockchain, it indicates that the radio access network device actually exists. If the first identity hash value cannot be found on the blockchain, it indicates that the radio access network device does not exist.

In this embodiment of this application, a blockchain function is introduced into a RAN architecture, to implement bidirectional authentication based on blockchain authentication, so that a security risk problem of conventional authentication can be overcome, an unauthorized device can be removed, and a core network does not need to participate in authentication, thereby avoiding upgrade of a function of a core network element.

With reference to the sixth aspect, in some implementations of the sixth aspect, before the radio access network device sends a first authentication request to the relay device, the method further includes: The radio access network device receives a second identity hash value from the relay device, where the second identity hash value is an identity hash value of the relay device; and the radio access network device determines that the second identity hash value exists in a blockchain network, where the blockchain network is used to manage identity information of the relay device.

The relay device may send the identity hash value of the relay device to the radio access network device. It should be understood that the identity hash value of the relay device may be generated when the relay device performs registration on the blockchain network, and the second identity hash value is stored on the blockchain, that is, the second identity hash value may be found on the blockchain.

Optionally, the relay device may further simultaneously send the public key S2 of the relay device to the radio access network device.

Optionally, the second identity hash value and the public key S2 of the relay device may be used as a RAN intelligent controller (RAN intelligent controller, RIC) container, and are carried in an RRCSetupRequest message.

After receiving the second identity hash value sent by the relay device, the radio access network device first performs query on the blockchain based on the second identity hash value, to determine whether the relay device actually exists. If the second identity hash value can be found on the blockchain, it indicates that the relay device actually exists. If the second identity hash value cannot be found on the blockchain, it indicates that the relay device does not exist.

In this embodiment of this application, a blockchain function is introduced into a RAN architecture, to implement bidirectional authentication based on blockchain authentication, so that a security risk problem of conventional authentication can be overcome, an unauthorized device can be removed, and a core network does not need to participate in authentication, thereby avoiding upgrade of a function of a core network element.

With reference to the sixth aspect, in some implementations of the sixth aspect, the method further includes: A central unit of the radio access network device sends type indication information to a distributed unit of the radio access network device, where the type indication information indicates that the relay device is an NCR.

After the radio access network device completes initial access of the relay device, the central unit of the radio access network device needs to send indication information to the distributed unit, to indicate that the relay device is the NCR. The indication information is carried in an F1 interface message between the CU and the DU, for example, is carried in a UE context setup request message. This is because an RRC layer message carrying the NCR identity indication information is decapsulated, read, and processed by the CU, the DU does not know that an accessed device is the NCR device, and subsequently the DU needs to perform configuration for the NCR.

The authentication manner provided in this application can protect security of the relay device and an operator network, and prevent an unauthorized device from accessing the operator network or the relay device from being used by an unauthorized network, thereby improving network security.

In the method according to any one of the sixth aspect and the possible implementations of the sixth aspect, the relay device and the radio access network device may pre-obtain respective private keys and public keys of each other. The following manners may be used in addition to a manner of sending the public keys to each other:
In a possible manner, the radio access network device and the relay device preconfigure authentication information, where the authentication information includes the respective private keys of the radio access network device and the relay device. Alternatively, certificates issued by an operator are pre-installed, where the certificates include the respective private keys of the radio access network device and the relay device, and optionally may further include the public keys of each other.

In a possible manner, an OAM may preconfigure the private key S1 and the public key S2 of the relay device for the relay device. Optionally, the OAM may further preconfigure the public key G2 of the radio access network device for the relay device. Likewise, the OAM may preconfigure the private key G1 and the public key G2 of the radio access network device for the radio access network device. Optionally, the OAM may further preconfigure the public key S2 of the relay device for the radio access network device.

In a possible manner, the relay device may apply to the OAM for the private key S1 and the public key S2, and optionally may further apply to the OAM for the public key G2 of the radio access network device. Likewise, the radio access network device may apply to the OAM for the private key G1 and the public key G2, and optionally may further apply to the OAM for the public key S2 of the relay device.

In a possible manner, a network management helps the radio access network device obtain a certificate of the radio access network device, helps the relay device obtain a certificate of the relay device, provides the public key G2 of the radio access network device for the relay device, and provides the public key S2 of the relay device for the radio access network device.

According to a seventh aspect, an authentication method is provided. The method includes: A central unit of a radio access network device sends type indication information to a distributed unit of the radio access network device, where the type indication information indicates that a relay device accessing the radio access network device is an NCR.

It should be understood that the authentication method provided in the seventh aspect may be performed after the method according to any one of the first aspect to the sixth aspect and the possible implementations of the first aspect to the sixth aspect.

According to an eighth aspect, a communication apparatus is provided, including at least one processor. The at least one processor is configured to execute a computer program stored in a memory, so that the apparatus implements the method according to any one of the first aspect to the seventh aspect and the possible implementations of the first aspect to the seventh aspect.

According to a ninth aspect, a communication system is provided, including a radio access network device and a relay device. The radio access network device performs the method according to any one of the first aspect and the possible implementations of the first aspect, and the relay device performs the method according to any one of the second aspect and the possible implementations of the second aspect.

According to a tenth aspect, a communication system is provided, including a core network and a relay device. The core network performs the method according to any one of the third aspect and the possible implementations of the third aspect, and the relay device performs the method according to any one of the fourth aspect and the possible implementations of the fourth aspect.

According to an eleventh aspect, a communication system is provided, including a radio access network device and a relay device. The relay device performs the method according to any one of the fifth aspect and the possible implementations of the fifth aspect, and the radio access network device performs the method according to any one of the sixth aspect and the possible implementations of the sixth aspect.

According to a twelfth aspect, a computer-readable storage medium is provided, and stores a computer program or instructions. The computer program or the instructions are used to implement the method according to any one of the first aspect to the seventh aspect and the possible implementations of the first aspect to the seventh aspect.

According to a thirteenth aspect, a computer program product is provided. When the computer program product runs on a computer, the computer is enabled to perform the method according to any one of the first aspect to the seventh aspect and the possible implementations of the first aspect to the seventh aspect.

### BRIEF DESCRIPTION OF DRAWINGS

FIG. 1 is a diagram of a scenario of a communication system;
FIG. 2 is a diagram of architectures of an NCR and a common repeater according to an embodiment of this application;
FIG. 3 is a diagram of a network architecture of an authentication method according to an embodiment of this application;
FIG. 4 is a schematic flowchart of an authentication method according to an embodiment of this application;
FIG. 5 is a schematic flowchart of another authentication method according to an embodiment of this application;
FIG. 6 is a schematic flowchart of another authentication method according to an embodiment of this application;
FIG. 7 is a schematic flowchart of another authentication method according to an embodiment of this application;
FIG. 8 is a schematic flowchart of another authentication method according to an embodiment of this application;
FIG. 9 is a diagram of a structure of a radio access network device based on an O-RAN architecture according to an embodiment of this application.
FIG. 10 is a schematic flowchart of another authentication method according to an embodiment of this application;
FIG. 11 is a schematic flowchart of another authentication method according to an embodiment of this application;
FIG. 12 is a schematic flowchart of user registration on a blockchain according to an embodiment of this application;
FIG. 13 is a schematic flowchart of user login on a blockchain according to an embodiment of this application;
FIG. 14 is a diagram of an architecture of a radio access network device based on a blockchain management function according to an embodiment of this application;
FIG. 15 is a diagram of an architecture of another radio access network device based on a blockchain management function according to an embodiment of this application;
FIG. 16 is a diagram of an architecture of another radio access network device based on a blockchain management function according to an embodiment of this application;
FIG. 17 is a schematic flowchart of another authentication method according to an embodiment of this application;
FIG. 18 is a schematic flowchart of another authentication method according to an embodiment of this application;
FIG. 19 is a block diagram of a communication apparatus according to an embodiment of this application; and
FIG. 20 is a block diagram of a communication device according to an embodiment of this application.

### DESCRIPTION OF EMBODIMENTS

Coverage is a basic function of a cellular network. Deployment of a relay node in an area with poor signal coverage can expand network coverage. A radio frequency (radio frequency, RF) repeater (repeater) is a non-regenerative relay node, can amplify a received signal and forward an amplified signal, and has low costs, a simple structure, easy deployment, and low power consumption. The RF repeater has been deployed in a second generation (second generation, 2G) network, a third generation (third generation, 3G) network, and a fourth generation (fourth generation, 4G) network, and is a simplest and most cost-effective solution for improving network coverage. A fifth generation mobile communication technology (5th generation mobile communication technology, 5G) uses higher frequency bands to obtain large bandwidth, such as sub-6 gigahertz (GHz) and millimeter-wave bands. However, a high-frequency radio path loss and a penetration loss are large, so that coverage is small, and a blind spot may exist in the coverage. Therefore, a repeater is more required to expand the coverage.

A 5G RF repeater is also referred to as a new radio (new radio, NR) repeater, and supports 5G FR1 (frequency range 1) and FR2 (frequency range 2) frequency bands. Because 5G also supports time division duplex (time division duplex, TDD), a bandwidth part (bandwidth part), massive multiple-input multiple-output, hybrid beamforming (beamforming), and other technologies, the NR repeater also needs to support the foregoing capabilities. According to the 3rd generation partnership project (3rd generation partnership project, 3GPP) R17 standard, the NR repeater does not support adaptive beamforming for a user, but supports and manually manages static beamforming with a fixed transmission direction. When a mobile device (user equipment, UE) encounters strong interference, performance of the static beamforming is poor. The RF repeater and the NR repeater generally include only radio unit (radio unit, RU) modules.

The following describes technical solutions in embodiments of this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

It should be noted that names of messages between entities or modules, names of parameters in the messages, or the like in this application are merely an example. There may be other names during specific implementation. This is not specifically limited in this application.

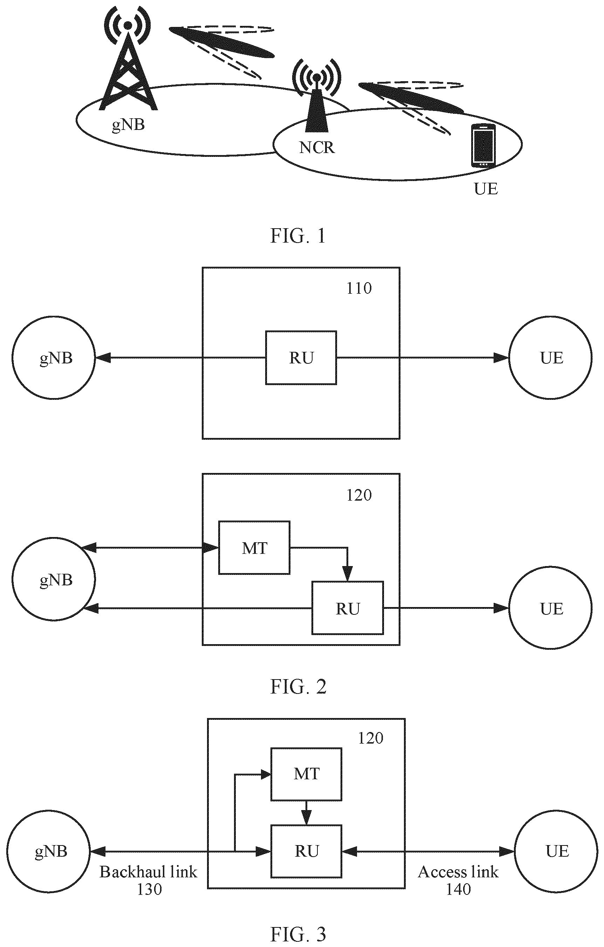

FIG. 1 is a diagram of a scenario of a communication system.

If a 5G next-generation NodeB (next-generation NodeB, gNB) obtains control information such as sending timing (timing) information, transmit and receive beam information, bandwidth information, and switch information of an NR repeater, the gNB may control the NR repeater to perform "intelligent" amplification and forwarding. This type of NR repeater is referred to as a network-controlled repeater (network-controlled repeater, NCR) or a smart repeater (smart repeater, SR), or is referred to as a network-controlled repeater, a smart repeater, or an intelligent repeater. The NCR supports uplink/downlink sensing, dynamic TDD, a bandwidth part, beam sensing, beamforming, uplink/downlink (uplink/downlink) power control, and dynamic switch, and particularly has an adaptive beamforming capability.

FIG. 2 is a diagram of architectures of an NCR and a common repeater according to an embodiment of this application.

As shown in FIG. 2, 110 is the common repeater, and 120 is the NCR. Different from the architecture of the common repeater 110, in addition to an RU module, the architecture of the NCR 120 additionally has an independent mobile terminal (mobile terminal, MT) module, to specially receive control signaling from a gNB or feed back signaling to a gNB.

FIG. 3 is a diagram of a network architecture of an authentication method according to an embodiment of this application. The authentication method provided in this application may be used in the network architecture, and certainly may also be used in a future network architecture, for example, a sixth generation (6th generation, 6G) network architecture. This is not specifically limited in this application.

A gNB is a 5G next-generation NodeB, and supports relay communication of an NCR120 and supports initial access, authentication, configuration, and other processes of an MT module.

UE is user equipment, and communicates with the gNB through the NCR 120.

The MT is a mobile terminal module of the NCR 120, receives control signaling from the gNB, and configures an RU module of the NCR 120.

The RU is a radio frequency module of the NCR120 and is controlled by the MT module, and forwards an uplink signal or a downlink signal of the gNB or the UE to a peer end.

A backhaul link (backhaul link) 130 is a connection channel between the NCR 120 and the gNB, and is used to receive a signal of the gNB or forward a signal of the UE.

An access link (access link) 140 is a connection channel between the UE and the NCR 120, and is used to forward a signal of the gNB or receive a signal of the UE.

The NCR 120 includes one MT module and one RU module, and communicates with the gNB over the backhaul link 130 and communicates with the UE over the access link 140. Under control of the gNB, the NCR 120 amplifies a downlink signal sent by the gNB and forwards an amplified downlink signal to the UE, and amplifies an uplink signal sent by the UE and forwards an amplified uplink signal to the gNB, to implement coverage enhancement.

It should be understood that the NCR device may have two forms, to be specific, the NCR may be deployed as a network device outdoors or on a base station side, or may be deployed as a terminal device at home and indoors. Regardless of a form, to protect security of the NCR device and an operator network, a verification process or an authentication process needs to be set in a process in which the NCR-MT accesses a network, so as to prevent an unauthorized user from accessing the operator network or prevent the NCR device from being used by an unauthorized network. The unauthorized network usually uses a rogue base station to forge a normal mobile communication signal. The rogue base station is an independent communication network system and has some functions of a mobile communication base station. For some specific purposes, the rogue base station enables a mobile device to automatically perform access. After obtaining personal privacy information from the device, the device reselects an actual communication network.

Authentication provided in 3GPP specifications is core network authentication. If the NCR device is used as a network device, the NCR device may be visible to only a radio access network (radio access network, RAN) side, or may be privately managed by an operator, or may be managed by an operations, administration and maintenance (operations, administration and maintenance, OAM) network element. Therefore, an OAM-based authentication mechanism and a RAN architecture-based authentication mechanism also need to be designed, and the authentication mechanisms need to be computationally friendly, to reduce power consumption and an access delay of a resource-limited device.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a fifth generation (5th generation, 5G) system, a sixth generation (6th generation, 6G) system, or a new radio (new radio, NR) system.

For ease of understanding of the technical solutions of this application, the following briefly describes related concepts or related technologies in this application.

UE: The UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, an SIP phone, a WLL station, a PDA, a handheld device or a computing device having a wireless communication function, another processing device connected to a wireless modem, a vehicle-mounted device, a wearable device, a terminal device in a 5G network, or a terminal device in a PLMN. In addition, the terminal device may alternatively be a terminal device in an internet of things (internet of things, IoT) system. An IoT is an important part in future development of information technologies. A main technical feature of the IoT is to connect things to a network by using a communication technology, to implement an intelligent network for human-machine interconnection and thing-thing interconnection. The IoT technology may use, for example, a narrow band (narrow band) NB technology to achieve massive connections, deep coverage, and terminal power saving. In addition, the terminal device may alternatively include a sensor such as an intelligent printer, a train detector, or a gas station, and main functions include: collecting data (for some terminal devices); and receiving control information and downlink data of a network device, sending an electromagnetic wave, and transmitting uplink data to the network device. It should be understood that the terminal device may be any device that can access a network. The terminal device may communicate with an access network device by using an air interface technology.

Network-controlled repeater (network-controlled repeater, NCR): The NCR is also referred to as an intelligent repeater, a smart repeater, or a smart repeater (smart repeater, SR). The NCR supports uplink/downlink sensing, dynamic TDD, a bandwidth part, beam sensing, beamforming, uplink/downlink (uplink/downlink) power control, dynamic switch, and the like. Particularly, the NCR has an adaptive beamforming capability. Different from an architecture of a common repeater, in addition to an RU module, an architecture of the NCR additionally has an independent MT module, to specially receive control signaling from a base station or feed back signaling to the base station.

Network management device: The network management device may be a function network element in a next generation core (next generation core, NGC) or a 5G core (5G core, 5GC). For example, the network management device may be an operations, administration and maintenance (operations, administration and maintenance, OAM) network element. The network management device may include an element management system (element management system, EMS) and a network management system (network management system, NMS). Alternatively, the network management device may be a function network element deployed in a backbone network behind the 5GC, or the network management device may be deployed at another location. A specific deployment location of the network management device is not limited in this application.

Authentication (authentication): The authentication includes unidirectional authentication and bidirectional authentication.

Unidirectional authentication: The unidirectional authentication means that a communication network performs authentication on a user. This prevents access of an unauthorized user but cannot prevent a user from accessing an unauthorized network node.

Bidirectional authentication: The bidirectional authentication means performing bidirectional authentication between a user and a mobile communication network. The bidirectional authentication includes user authentication and network authentication. The user authentication means that a network performs authentication on a user. This prevents an unauthorized user from occupying a network resource. The network authentication means that a user performs authentication on a network. This prevents a user from accessing an unauthorized network and prevents deception of key information.

Radio access network (radio access network, RAN): The radio access network is an access network that implements a network access function based on a wireless communication technology. The radio access network can manage a radio resource, and provide a wireless access service or an air interface access service for a terminal, to forward a control signal and user data between the terminal and a core network. In this application, the access network may be implemented by using an access network device. A radio access network (radio access network, RAN) device in this application includes but is not limited to a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a mobile switching center, and the like. Alternatively, the radio access network device may be a radio controller in a cloud radio access network (cloud radio access network, CRAN) scenario. Alternatively, the access device may be a relay station, an access point, a vehicle-mounted device, a wearable device, an access device in a 5G network, an access device in a future evolved public land mobile network (public land mobile network, PLMN) network, or the like, or may be an access point (access point, AP) in a wireless local area network (wireless local area network, WLAN), or may be a gNB in a next radio (next radio, NR) system. This is not limited in embodiments of this application.

Open radio access network (open radio access network, O-RAN): The open radio access network is to build an open, virtualized, and intelligent RAN architecture, to create a competitive ecosystem including a plurality of vendors whose products can interoperate with each other. The O-RAN alliance is a global community in which members will work together to formulate a unified development roadmap for future O-RAN standards and specifications, reference architectures, and interfaces between network components.

Blockchain (blockchain): The blockchain is a chain formed by a plurality of blocks. Each block stores specific information, and the blocks are connected to form a chain according to a generation time sequence. The blockchain is stored in all servers. As long as one server in an entire system is working, the entire blockchain is secure. These servers are referred to as nodes in a blockchain system, and provide storage space and computing power support for the entire blockchain system. If information in the blockchain needs to be modified, consent of more than half of the nodes needs to be obtained and information in all the nodes needs to be modified. These nodes are usually controlled by different subjects. Therefore, it is extremely difficult to tamper with the information in the blockchain. Compared with a conventional network, the blockchain has two core features: difficulty in data tampering, and decentralization. Based on the two features, information recorded by the blockchain is more authentic and reliable, and can help resolve a problem of mutual distrust between people. In addition, the blockchain is a decentralized digital encryption technology that can be used to build a decentralized digital identity authentication and management system, and has features of multi-party consensus, difficulty in tampering, openness and transparency, traceability, and the like.

Unified data management (unified data management, UDM): The UDM can be understood as a name of a unified data management network element in a 5G architecture. The unified data management network element mainly includes the following functions: unified data management, and supporting authentication credential processing, user identity processing, access authorization, registration and mobility management, subscription management, short message management, and the like in a third generation partnership project (3rd generation partnership project, 3GPP) authentication and key agreement mechanism.

Authentication server function (authentication server function, AUSF): The AUSF is mainly used for user authentication and the like.

Access and mobility management function (access and mobility management function, AMF): The AMF may be understood as a name of a mobility management network element in the 5G architecture. The mobility management network element mainly includes the following functions related to access and mobility, for example, connection management, mobility management, registration management, access authentication and authorization, reachability management, and security context management.

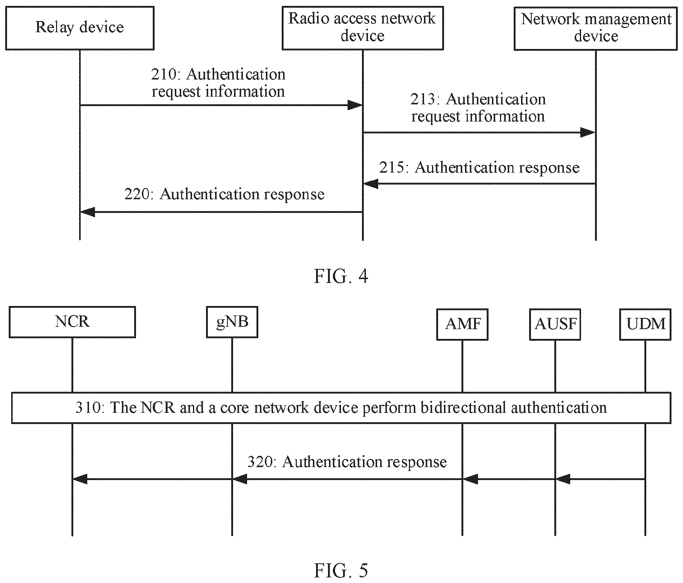

FIG. 4 is a schematic flowchart of an authentication method according to an embodiment of this application.

A network management device may include an element management system (element management system, EMS) and a network management system (network management system, NMS). For example, the network management device may be an OAM. The network management device may be a function network element in a next generation core (next generation core, NGC) or a 5G core (5G core, 5GC). Alternatively, the network management device may be a function network element deployed in a backbone network behind the 5GC, or the network management device may be deployed at another location. A specific deployment location of the network management device is not limited in this application.

For example, a relay device may be an NCR, a radio access network device may be a gNB, and the network management device may be an OAM. The NCR may include an RU module and an MT module. The following execution actions of the NCR may be completed by the MT module, or may be completed by using a module that can complete the following functions. This is not limited in this application. In this embodiment of this application, an NCR-MT represents the MT module of the NCR.

210: The relay device sends authentication request information to the radio access network device.

The relay device sends the authentication request information to the radio access network device, where the authentication request information may include identity information of the relay device. Optionally, the authentication request information may include a permanent identifier of the relay device or a concealed identifier obtained by encrypting the permanent identifier, for example, a subscription permanent identifier (subscription permanent identifier, SUPI) or a subscription concealed identifier (subscription concealed identifier, SUCI).

Optionally, the identity information of the relay device may include any one or more of a temporary identifier of the relay device and device type indication information of the relay device. Alternatively, in addition to one or more of the temporary identifier of the relay device and the device type indication information of the relay device, the identity information of the relay device may further include the SUPI or the SUCI. It should be understood that the device type indication information indicates that the relay device is the NCR.

Optionally, the radio access network device may read the authentication request information, or may not read the authentication request information, and directly send the authentication request information to the OAM for authentication.

Optionally, the authentication request information may be carried in any one or more of a radio resource control setup request (RRCSetupRequest, which is also referred to as Msg3) message and a radio resource control setup complete (RRCSetupComplete, which is also referred to as Msg5) message in a random access process.

For example, when the authentication request information is carried in the Msg3 message, a new value may be added to an establishment cause (establishment cause) information element (information element, IE). In this embodiment of this application, an "ncr-MT-Access" IE replaces spare6 in the original Msg3 message, to indicate that a device initiating an authentication request is the NCR-MT. In this embodiment of this application, an "InitialUE-Identity" IE is used to carry identity information NCR-MT ID of the NCR, the identity information may be a temporary identifier, a permanent identifier, or a concealed identifier, and a value of an "ng-5G-S-TMSI-Part1" field is the NCR-MT ID. For example, content of the Msg3 message is as follows:

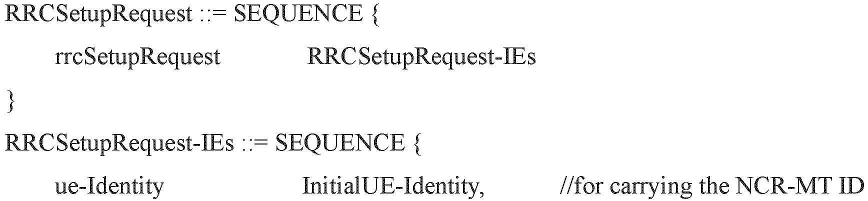

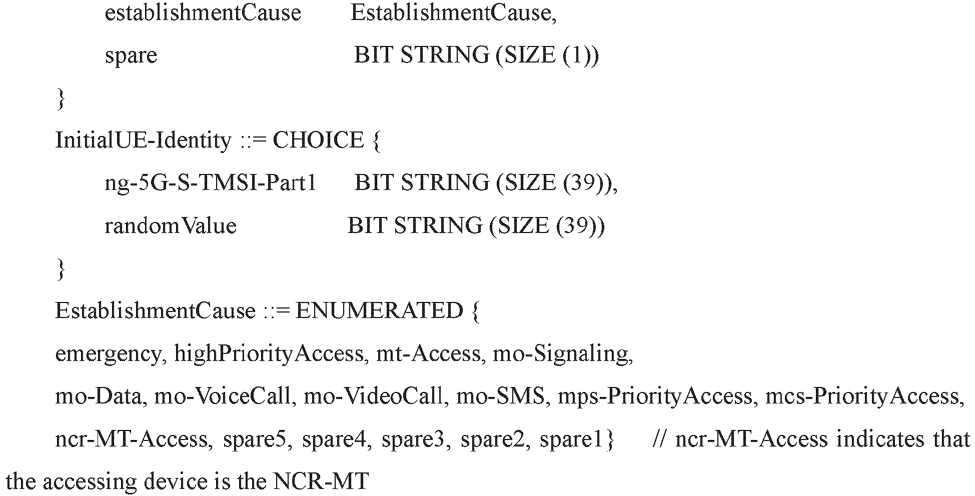

For example, when the authentication request information is carried in the Msg5 message, an "ncr-NodeIndication" field is added to notify the gNB that a device that completes random access is the NCR-MT, and identity information of the NCR-MT may be included in the "InitialUE-Identity" IE of the Msg3. Content of the Msg5 message is as follows. A value of "ncr-NodeIndication-r18" indicates whether the NCR device completes random access. For explanations of other fields, refer to TS 38.331 v16.5.0. Details are not described in this application.

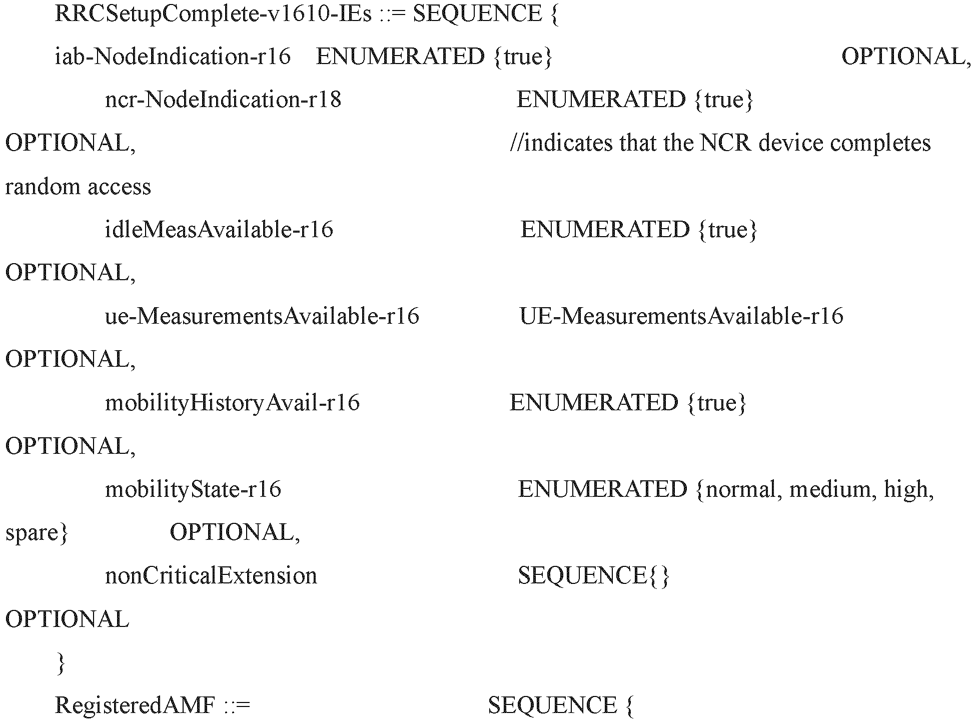

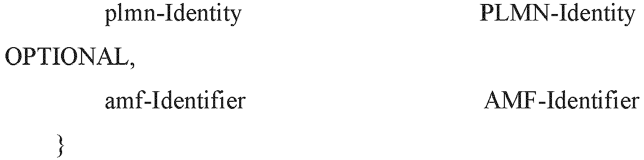

213: The radio access network device sends the authentication request information to the network management device.

The radio access network device initiates an authentication request to the OAM based on the authentication request information sent by the NCR. The OAM performs identity authentication and authorization on the NCR based on the identity information of the NCR in a first authentication request. 3GPP OAM functions include an authentication function. For details, refer to an existing OAM authentication procedure in TS 28.533. Details are not described in this application.

215: The network management device sends an authentication response to the radio access network device.

After the OAM completes the authentication on the NCR, the OAM sends the authentication response to the gNB, where the authentication response includes a result of performing authentication on the NCR by the OAM, for example, may include a result indicating that the authentication on the NCR succeeds, or may include a result indicating that the authentication on the NCR fails.

220: The radio access network device sends the authentication response to the relay device.

The radio access network device determines, based on the result that is of performing authentication on the NCR and that is included in the authentication response, whether to allow access of the NCR, and forwards the authentication result to the NCR.

If the authentication response includes the result indicating that the authentication on the NCR fails, the radio access network device rejects access of the NCR, and forwards the authentication failure result to the NCR.

If the authentication response includes the result indicating that the authentication on the NCR succeeds, the radio access network device forwards the authentication success result to the NCR, and configures access of the NCR.

For example, the radio access network device is the gNB. After initial access of the NCR is completed, a central unit (central unit, CU) of the gNB needs to send indication information to a distributed unit (distributed unit, DU) of the gNB, to indicate that the device is the NCR. The indication information is carried in an F1 interface message between the CU and the DU, for example, is carried in a UE context setup request (UE context setup request) message. This is because a radio resource control (radio resource control, RRC) layer message carrying the NCR identity indication information is decapsulated, read, and processed by the CU, the DU does not know that an accessing device is the NCR device, and subsequently the DU needs to perform configuration for the NCR.

It should be understood that, in the foregoing embodiment, that the NCR represents the relay device and the gNB represents the radio access network device is merely an example, and should not be construed as a limitation on this application.

FIG. 5 is a schematic flowchart of another authentication method according to an embodiment of this application.

310: An NCR and a core network device perform bidirectional authentication.

For example, the NCR may use a UE-based authentication manner. For example, the 5G authentication and key agreement (authentication and key agreement, AKA) protocol or the extensible authentication protocol-authentication and key agreement (extensible authentication protocol-authentication and key agreement, EAP-AKA) protocol may be used for authentication.

Non-access stratum (non-access stratum, NAS) messages are transparently transmitted between the NCR and core network elements UDM, AUSF, and AMF through a gNB to complete bidirectional authentication.

It should be understood that the foregoing execution action of the NCR may be completed by an MT module, or may be completed by using a module that can complete the foregoing function. This is not limited in this application.

320: The core network element sends an authentication response to the NCR.

Because the gNB cannot read the NAS message, after the authentication on the NCR succeeds, the core network needs to send the authentication response to the gNB, to notify the gNB that an accessing device is the NCR.

After the authentication between the core network and the NCR is completed, the core network may notify, in a plurality of manners, the gNB that the authenticated device is the NCR device. For example, the core network element AMF or AUSF sends the authentication response to the gNB, to notify the gNB that the authenticated device is the NCR device.

Alternatively, the UDM may obtain subscription information of the NCR-MT based on an SUPI of the NCR-MT, and learn, by using the subscription information, that the accessing device is the NCR device. Then, the UDM sends the authentication response to the AMF, and the AMF forwards the authentication response to the gNB, to indicate that the authenticated device is the NCR device.

Alternatively, the UDM first sends the authentication response to the AUSF, the AUSF forwards the authentication response to the AMF, and then the AMF sends the authentication response to the gNB, to notify the gNB that the authenticated device is the NCR device.

It should be understood that the authentication response that carries NCR identity indication information is read and processed by a CU of the gNB. Therefore, after initial access of the NCR is completed, the CU needs to send the indication information to a DU, to indicate that the accessing device is the NCR, so that the DU performs configuration for the NCR. The NCR identity indication information is carried in an F1 interface message between the CU and the DU, for example, may be carried in a UE context setup request message.

It should be understood that, in the foregoing embodiment, that the NCR represents a relay device and the gNB represents a radio access network device is merely an example, and should not be construed as a limitation on this application.

It should be noted that a name of each network element included in FIG. 5 is merely a name, and the name does not limit a function of the network element. In a 5G network and another future network, the foregoing network elements may alternatively have other names. This is not specifically limited in this application. For example, in a 6G network, some or all of the foregoing network elements may still use terms in 5G, or may have other names. A general description is provided herein. Details are not described again below.

A person skilled in the art may understand that interaction between the network elements shown in FIG. 5 is merely an example for description. Actually, a 5G system may further include another network element that interacts with the network element shown in the figure. Details are not described herein.

An OAM-based authentication manner and a UE-based core network authentication manner provided in embodiments of this application can protect security of an NCR device and an operator network, and prevent an unauthorized device from accessing the operator network or prevent the NCR device from being used by an unauthorized network.

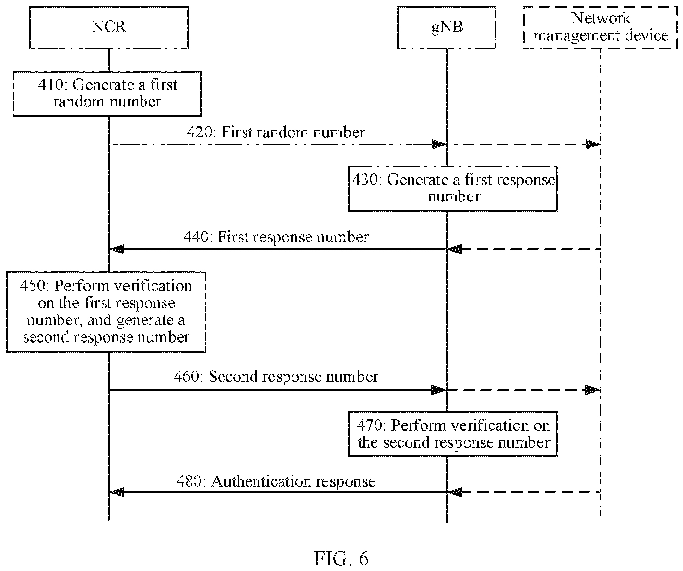

FIG. 6 is a schematic flowchart of another authentication method according to an embodiment of this application.

This embodiment of this application provides a solution in which a gNB and an NCR complete fast bidirectional authentication based on respective public keys and private keys. The authentication is completed in an initial access process of the NCR. The private key of the NCR is S1, and the public key of the NCR is S2. The private key of the gNB is G1, and the public key of the gNB is G2.

The following execution actions of the NCR may be completed by an MT module, or may be completed by using a module that can complete the following functions. This is not limited in this application.

410: The NCR generates a first random number.

Optionally, the NCR may generate the first random number by using a random number generator, or may preconfigure the first random number, or may obtain the first random number from a reliable third party. A specific manner of obtaining the first random number is not limited in this application.

420: The NCR sends the first random number to the gNB.

For example, the NCR may send the first random number to the gNB. Optionally, the NCR may further simultaneously send any one or more of the public key S2 of the NCR and an authentication manner indication to the gNB. It should be understood that the authentication manner indication includes an indication of authentication in a core network, an indication of authentication in a radio access network, a unidirectional authentication indication, or a bidirectional authentication indication.

Optionally, the first random number, the public key S2 of the NCR, and the authentication manner indication may be carried in an RRCSetupRequest message.

430: The gNB generates a first response number.

After receiving the first random number sent by the NCR, the gNB may generate the first response number based on the first random number and the private key G1 of the gNB. For example, the gNB may scramble or encrypt the first random number by using G1, to obtain the first response number. The first response number is used by the NCR to perform authentication on the gNB.

440: The gNB sends the first response number to the NCR.

The gNB sends the first response number to the NCR. Optionally, the gNB may further simultaneously send the public key G2 of the gNB to the NCR.

For example, the first response number and the public key G2 of the gNB may be carried in a radio resource control setup (RRCSetup, which is also referred to as Msg4) message in a random access process.

450: The NCR performs verification on the first response number, and generates a second response number.

The NCR performs verification on the first response number by using the public key G2 of the gNB. Specifically, the NCR descrambles or decrypts the first response number by using the public key G2. If the first random number can be obtained, it indicates that the verification succeeds; otherwise, the verification fails.

If the verification fails, it is considered that the authentication on the gNB fails, the NCR rejects access to the gNB and a current cell, and adds an identity document (identity document, ID) of the gNB and/or an ID of the cell to a blocklist, or marks the ID of the gNB and/or the ID of the cell in historical cell information, and the NCR re-initiates an initial access procedure. It should be understood that the NCR may obtain the ID of the gNB and the ID of the cell in the random access process.

If the verification by using the public key G2 succeeds, the NCR generates the second response number based on the first response number and the private key S1 of the NCR. For example, the NCR may scramble or encrypt the first response number by using the private key S1, to obtain the second response number. The second response number is used by the gNB to perform authentication on the NCR.

460: The NCR sends the second response number to the gNB.

For example, the second response number may be carried in an RRCSetupComplete message.

470: The gNB performs verification on the second response number.

The gNB performs verification on the second response number by using the public key S2 of the NCR. Specifically, the gNB descrambles or decrypts the second response number by using the public key S2. If the first response number can be obtained, it indicates that the verification succeeds; otherwise, the verification fails.

If the verification fails, it is considered that the authentication on the NCR fails, and the gNB rejects access of the NCR, and adds an ID of the NCR to a blocklist.

If the verification by using the public key S2 succeeds, step 480 is performed.

480: The gNB sends an authentication response to the NCR.

The gNB sends the authentication response to the NCR, to notify the NCR whether the authentication succeeds, where the authentication response includes a result of performing authentication on the NCR.

For example, the authentication response may be carried in a radio resource control reconfiguration (RRCReconfiguration) message.

It should be understood that the response numbers, the random number, and the like in steps 420, 440, 460, and 480 may be referred to as authentication information. The authentication information may be included in another RRC message, or may be included in a container (container) in an RRC message for sending. A name and a format of a sent message are not limited in this application.

In this embodiment of this application, the NCR and the gNB need to pre-obtain the respective private keys and the public keys of each other. The following manners may be used in addition to a manner of sending the public keys to each other:
In a possible manner, the gNB and the NCR preconfigure authentication information, where the authentication information includes the respective private keys of the gNB and the NCR. Alternatively, certificates issued by an operator are pre-installed, where the certificates include the respective private keys of the gNB and the NCR, and optionally may further include the public keys of each other.

In a possible manner, an OAM may preconfigure the private key S1 and the public key S2 of the NCR for the NCR. Optionally, the OAM may further preconfigure the public key G2 of the gNB for the NCR. Likewise, the OAM may preconfigure the private key G1 and the public key G2 of the gNB for the gNB. Optionally, the OAM may further preconfigure the public key S2 of the NCR for the gNB.

In a possible manner, the NCR may apply to the OAM for the private key S1 and the public key S2, and optionally may further apply to the OAM for the public key G2 of the gNB. Likewise, the gNB may apply to the OAM for the private key G1 and the public key G2, and optionally may further apply to the OAM for the public key S2 of the NCR.

In a possible manner, a network management device helps the gNB obtain a certificate of the gNB, helps the NCR obtain a certificate of the NCR, provides the public key G2 of the gNB for the NCR, and provides the public key S2 of the NCR for the gNB.

It should be understood that, in the foregoing embodiment, that the NCR represents a relay device and the gNB represents a radio access network device is merely an example, and should not be construed as a limitation on this application.

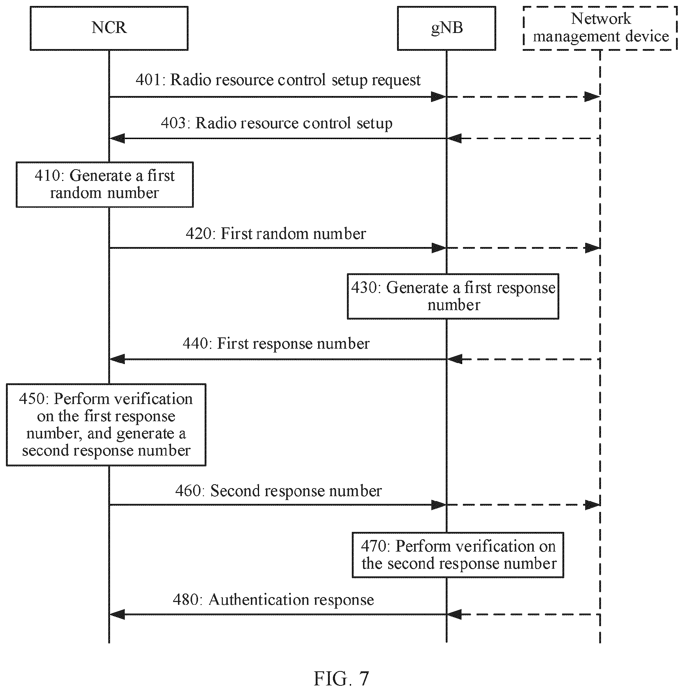

FIG. 7 is a schematic flowchart of another authentication method according to an embodiment of this application. A procedure in FIG. 7 is similar to that in FIG. 6. A difference lies in that, in FIG. 6, bidirectional authentication between the NCR and the gNB is completed in an initial access process of the NCR, and in FIG. 7, bidirectional authentication between the NCR and the gNB may be performed starting from Msg4 in a random access process.

401: The NCR sends an RRCSetupRequest message to the gNB. Optionally, the RRCSetupRequest message may carry any one or more of a temporary identifier of the NCR and device type indication information of the NCR.

403: The gNB initiates an authentication request for the NCR by using an RRCSetup message, and indicates an authentication manner.

It should be understood that steps 410 to 480 in FIG. 7 are the same as those in FIG. 6. Details are not described again in this application.

Optionally, the information carried in the messages in steps 401 and 403 may alternatively be included in another RRC message, or may be included in a container (container) in an RRC message for sending. A name and a format of a sent message are not limited in this application.

According to the authentication method provided in this embodiment of this application, bidirectional authentication is completed on a RAN side, so that authentication and initial access of the NCR can be quickly completed without participation of a core network, thereby avoiding upgrade of a function of a core network element.

It should be understood that, in the foregoing embodiment, that the NCR represents a relay device and the gNB represents a radio access network device is merely an example, and should not be construed as a limitation on this application.

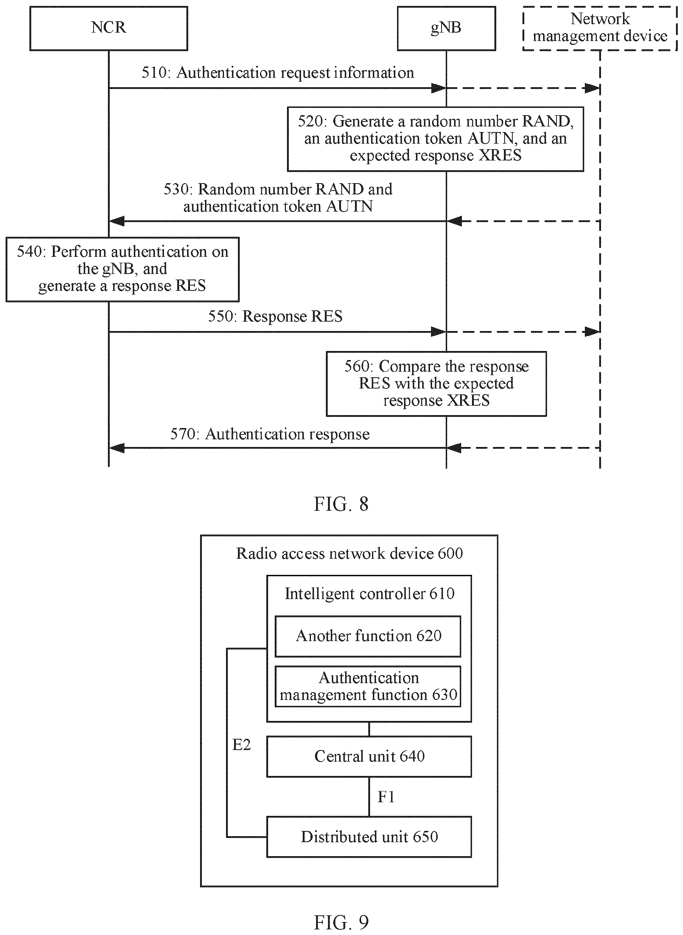

FIG. 8 is a schematic flowchart of another authentication method according to an embodiment of this application.

This embodiment of this application provides a solution of fast bidirectional authentication between a gNB and an NCR based on an authentication key of the NCR. A 5G AKA authentication function is moved from an AMF, an AUSF, and a UDM to a gNB side, to complete bidirectional authentication in an initial access process of the NCR.

510: The NCR sends authentication request information to the gNB.

The NCR sends the authentication request information to the gNB, where the authentication request information may include identity information of the NCR. Optionally, the identity information of the NCR may include a permanent identifier of the NCR or a concealed identifier obtained by encrypting the permanent identifier, for example, an SUPI or an SUCI. Optionally, the authentication request information may further include a public key S2 of the NCR.

For example, the authentication request information may be carried in an RRCSetupRequest message in a random access process, where a UE identity (ue-Identity) IE carries the permanent identifier of the NCR or the concealed identifier obtained by encrypting the permanent identifier.

520: The gNB generates an authentication vector.

The gNB obtains a key identity (key identity, KI) of the NCR, and generates the authentication vector. The KI may also be referred to as an authentication key. The authentication vector includes a random number (random number, RAND), an authentication token (authentication token, AUTN), and an expected response (expected response, XRES).

The RAND is generated by a random number generator in the AUSF and is used to calculate the expected response XRES.

The XRES is generated by the random number RAND and the authentication key KI, is used as a parameter for NCR validity check, and is compared with an RES generated by the NCR to determine whether authentication on the NCR succeeds.

The AUTN provides information for the NCR, so that the NCR can use the information to perform authentication on the gNB. The authentication token AUTN includes a random number sequence number (Sequence number, SQN) encrypted by an anonymity key (anonymity key, AK), an authentication management field (authentication management function, AMF), and a message authentication code (message authentication code, MAC). The AK is generated by using the random number RAND and the authentication key KI, and the AK may be a 48-bit anonymity key. It should be understood that the AK and the XRES have different purposes and generation algorithms. The MAC is calculated by using an f1 algorithm based on the RAND, the KI, the AUTH-AMF, and the SQN.

It should be understood that, because abbreviations of the access and mobility management function (access and mobility management function, AMF) and the authentication management field (authentication management function, AMF) are the same, in this application, the AMF represents the access and mobility management function, and the AUTH-AMF represents the authentication management field.

530: The gNB sends the random number RAND and the authentication token AUTN to the NCR.

The gNB sends the random number RAND and the authentication token AUTN to the NCR, so that the NCR performs authentication on the gNB. For example, the gNB may send an RRCSetup message to the NCR, where the message carries the random number RAND and the authentication token AUTN, and the authentication token AUTN includes the random number SQN encrypted by the AK, the AUTN-AMF, and the MAC.

540: The NCR performs authentication on the gNB, and generates a response RES.

The NCR uses the authentication key KI of the NCR and the received RAND, AUTN-AMF, and SQN to calculate the MAC, and verifies whether the MAC is the same as a MAC delivered by the gNB.

If the MAC calculated by the NCR is different from the MAC delivered by the gNB, the verification fails, the NCR rejects access to the gNB and a current cell, and adds an ID of the gNB and/or an ID of the current cell to a blocklist, or marks the ID of the gNB and/or the ID of the current cell in historical cell information, and the NCR re-initiates an initial access procedure. It should be understood that the NCR may obtain the ID of the gNB and the ID of the cell in the random access process.

If the MAC calculated by the NCR is the same as the MAC delivered by the gNB, the verification succeeds, that is, the NCR successfully authenticates the gNB, so that the NCR uses the authentication key KI of the NCR and the received RAND to generate the response (response, RES).

550: The NCR sends the response RES to the gNB.

The NCR sends the response RES to the gNB, so that the gNB performs authentication on the NCR. For example, the NCR may send an RRCSetupComplete message to the gNB, where the message carries the response RES.

560: The gNB compares the RES with the XRES.

The gNB receives the response RES, and compares the RES with the expected response XRES.

If the response RES is different from the XRES, the verification fails, access of the NCR is not allowed, and an ID of the NCR is added to a blocklist.

If the response RES is the same as the XRES, the verification succeeds, and a subsequent configuration procedure continues.

570: The gNB sends an authentication response to the NCR.

If the authentication on the NCR succeeds, the gNB sends the authentication response to the NCR, to notify the NCR of an authentication success result. Then, key derivation is performed on the gNB side, to complete an air interface security mode with the NCR.

Optionally, the foregoing authentication interaction information may be sent by using another RRC message, or may be sent as a container included in an RRC message. A name and a format of a sent message are not limited in this application.

In this embodiment of this application, the NCR and the gNB need to preconfigure authentication information, for example, the authentication key KI. For example, an optional configuration method includes:
In a possible manner, NCR authentication information, for example, NCR subscription information, is preconfigured on the gNB side.

In a possible manner, an OAM may preconfigure the authentication information for the gNB, or the gNB applies to the OAM for the authentication key KI of the NCR.

In a possible manner, if the OAM does not configure the NCR authentication information, the OAM may obtain the authentication key KI from the UDM based on the SUCI. For example, if the RRC message carries the NCR-MT identity SUCI, the OAM may obtain the KI based on the SUCI. Optionally, the OAM may obtain the KI from the UDM, or the OAM may obtain the KI from the UDM through the AMF.

In a possible manner, the gNB obtains the authentication key KI of the NCR through a network management device.

It should be understood that, in the foregoing embodiment, that the NCR represents a relay device and the gNB represents a radio access network device is merely an example, and should not be construed as a limitation on this application.

FIG. 9 is a diagram of a structure of a radio access network device based on an O-RAN architecture according to an embodiment of this application.

The radio access network device 600 includes a central unit 640, a distributed unit 650, and an intelligent controller 610. The intelligent controller 610 may be a RAN intelligent controller (RAN intelligent controller, RIC), the central unit 640 may be a CU module of a gNB, and the distributed unit 650 may be a DU module of the gNB. The central unit 640 communicates with the distributed unit 650 through an F1 interface defined in the 3GPP specifications, and the distributed unit 650 communicates with the intelligent controller 610 through an E2 interface defined in the O-RAN standard.

Optionally, the intelligent controller 610 may alternatively be deployed outside the radio access network device 600, or the intelligent controller 610 may be deployed at another location. A specific deployment location of the intelligent controller 610 is not limited in this application.

The intelligent controller 610 is a functional entity configured for the radio access network device 600 by using the O-RAN architecture in this embodiment of this application. The intelligent controller 610 includes an authentication management function 610 and another function 620. An RIC protocol layer of the intelligent controller 610 is located above an RRC layer, and a related message is included in an RRC message as an RIC container.

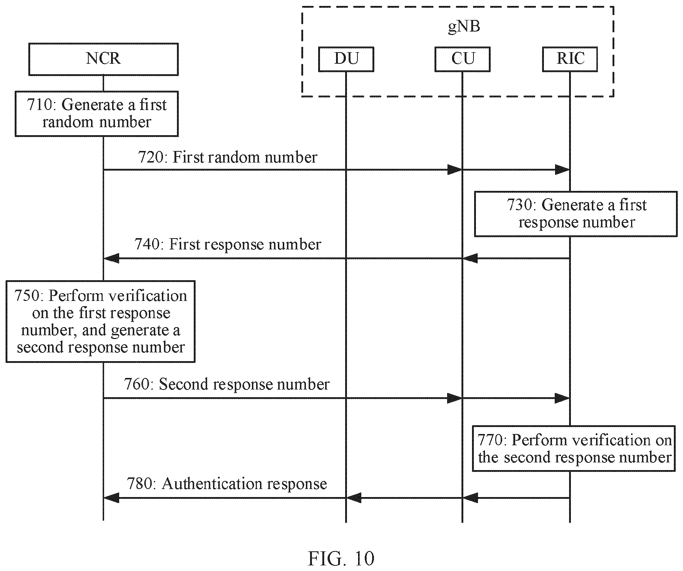

FIG. 10 is a schematic flowchart of another authentication method according to an embodiment of this application.

A structure of a gNB in FIG. 10 corresponds to that in FIG. 9. A CU represents the central unit 640, a DU represents the distributed unit 650, and an RIC represents the intelligent controller 610. For example, in this embodiment of this application, in an initial access process of an NCR, the intelligent controller 610 and the NCR complete bidirectional authentication. A specific authentication procedure and interaction information are similar to those in FIG. 6 and FIG. 7, but an authentication functional entity on a gNB side is implemented by the RIC.

In this application, a radio access network device may include the RIC. For example, the RIC may be deployed outside the gNB or inside the gNB. A specific deployment location of the RIC is not limited in this application.

The following execution actions of the NCR may be completed by an MT module, or may be completed by using a module that can complete the following functions. This is not limited in this application.

710: The NCR generates a first random number.

Optionally, the NCR may generate the first random number by using a random number generator, or may preconfigure the first random number, or may obtain the first random number from a reliable third party. A specific manner of obtaining the first random number is not limited in this application.

720: The NCR sends the first random number to the gNB.

For example, the NCR may send the first random number to the gNB. Optionally, the NCR may further simultaneously send any one or more of a public key S2 of the NCR and an authentication manner indication to the gNB. It should be understood that the authentication manner indication includes a unidirectional authentication indication and a bidirectional authentication indication.

Optionally, the first random number, the public key S2 of the NCR, and the authentication manner indication may be carried in an RRCSetupRequest message. When the RRCSetupRequest message carries the first random number, the message may also be referred to as an authentication request message.

730: The gNB generates a first response number.

After receiving the first random number sent by the NCR, the gNB may generate the first response number based on the first random number and a private key G1 of the gNB. For example, the gNB may scramble or encrypt the first random number by using G1, to obtain the first response number. The first response number is used by the NCR to perform authentication on the gNB.

740: The gNB sends the first response number to the NCR.

The gNB sends the first response number to the NCR. Optionally, the gNB may further simultaneously send a public key G2 of the gNB to the NCR.

For example, the first response number and the public key G2 of the gNB may be carried in a radio resource control setup (RRCSetup, which is also referred to as Msg4) message in a random access process.

750: The NCR performs verification on the first response number, and generates a second response number.

The NCR performs verification on the first response number by using the public key G2 of the gNB. Specifically, the NCR descrambles or decrypts the first response number by using the public key G2. If the first random number can be obtained, it indicates that the verification succeeds; otherwise, the verification fails.

Optionally, if the RIC does not provide the public key G2 of the gNB, the OAM may preconfigure the public key G2 of the gNB for the NCR, or the NCR applies to the OAM for the public key of the gNB, or a network management device participates in obtaining a certificate of the gNB and providing the public key of the gNB for the NCR.

If the verification fails, it is considered that the authentication on the gNB fails, the NCR rejects access to the gNB and a current cell, and adds an ID of the gNB and/or an ID of the cell to a blocklist or marks the ID of the gNB and/or the ID of the cell in historical cell information, and the NCR re-initiates an initial access procedure. It should be understood that the NCR may obtain the ID of the gNB and the ID of the cell in the random access process.

If the verification by using the public key G2 succeeds, the NCR generates the second response number based on the first response number and a private key S1 of the NCR. For example, the NCR may scramble or encrypt the first response number by using the private key S1, to obtain the second response number. The second response number is used by the gNB to perform authentication on the NCR.

760: The NCR sends the second response number to the gNB.

For example, the second response number may be carried in an RRCSetupComplete message.

770: The gNB performs verification on the second response number.

The gNB performs verification on the second response number by using the public key S2 of the NCR. Specifically, the NCR descrambles or decrypts the second response number by using the public key S2. If the first response number can be obtained, it indicates that the verification succeeds; otherwise, the verification fails.

Optionally, if the NCR does not provide the public key S2, the OAM may preconfigure the public key S2 for the RIC, or the RIC may apply to the OAM for the public key of the NCR. Alternatively, a network management participates in obtaining a certificate of the NCR and providing the public key of the NCR for the RIC.

If the verification fails, it is considered that the authentication on the NCR fails, and the gNB rejects access of the NCR, and adds an ID of the NCR to a blocklist.

If the verification by using the public key S2 succeeds, step 780 is performed.

780: The gNB sends an authentication response to the NCR.

The gNB sends the authentication response to the NCR, to notify the NCR whether the authentication succeeds, where the authentication response includes a result of performing authentication on the NCR.

If the verification in step 770 succeeds, the gNB continues to perform a subsequent configuration procedure. The CU sends indication information to the DU, to indicate that the device is the NCR device, so that the DU performs configuration for the NCR.

It should be understood that the foregoing authentication information may be included in another RRC message, or may be included in a container (container) in an RRC message for sending. A name and a format of a sent message are not limited in this application.

It should be understood that, in the foregoing embodiment, that the NCR represents a relay device and the gNB represents a radio access network device is merely an example, and should not be construed as a limitation on this application.

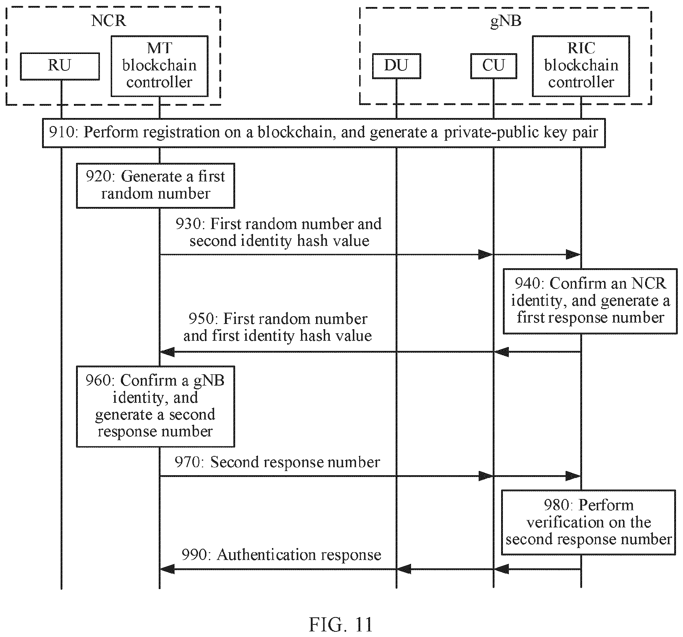

FIG. 11 is a schematic flowchart of another authentication method according to an embodiment of this application.

A conventional identity authentication manner has disadvantages, which may cause user data and privacy leakage. In an identity authentication process, network service providers need to collect user data to different degrees. Some of the service providers may disclose user data and user privacy due to subjective maliciousness or limited capabilities. Such events are emerging one after another and tend to spread gradually. In addition, an existing identity authentication manner is inefficient and has a single dimension. Data silos between service providers or certification organizations are difficult to streamline. As a result, a user needs to repeatedly perform authentication on same information in different places, and it is difficult for the user to reuse existing authentication information. In addition, the authentication information of the user is scattered and fragmented, and cannot completely reflect identity characteristics of the user. As a result, an individual cannot effectively manage identity information of the individual due to information fragmentation.

A blockchain (blockchain, BC) is a decentralized digital encryption technology that can be used to build a decentralized digital identity authentication and management system, and has features of multi-party consensus, difficulty in tampering, openness and transparency, traceability, and the like. The blockchain technology can agree on a single data value or a single state between all nodes in an open untrusted network. The blockchain technology can greatly improve conventional identity authentication. For example, by using an address account and a cryptography tool, real identity information of the user may be isolated from an authentication credential, to avoid data leakage generated in a verification process. By binding verification information to the address account, the user can better manage and use authentication information of the user. A connectivity feature of the blockchain technology can be used to connect different verification organizations and information users, making the identity authentication process more efficient and identity characteristics more comprehensive.

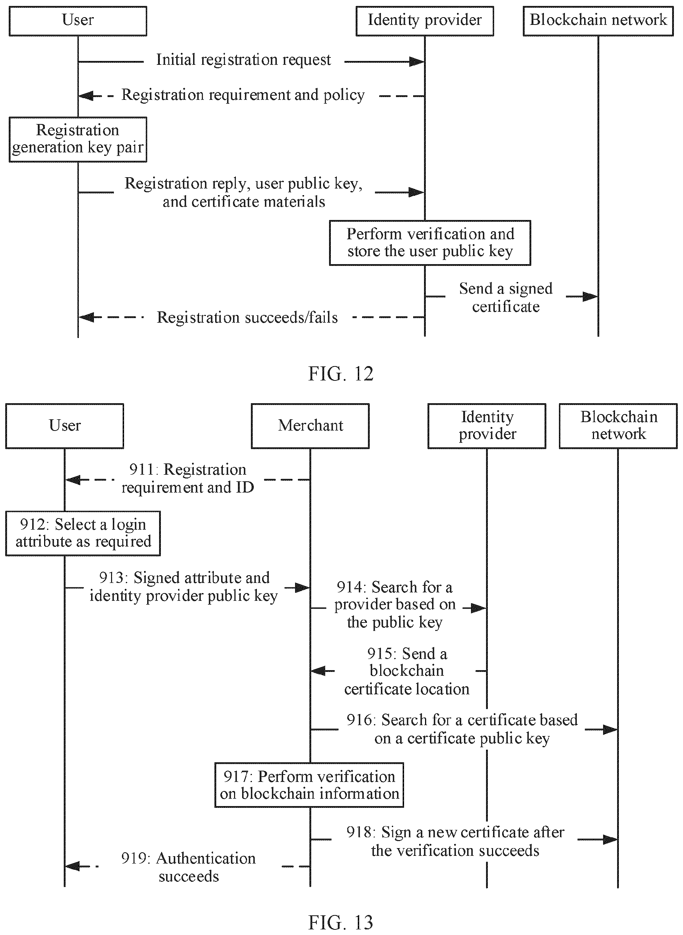

FIG. 12 is a schematic flowchart of user registration on a blockchain according to an embodiment of this application.

A user initiates a registration request process to an identity provider, generates a private-public key pair on a device of the user as an identity key of the user, sets a unique user name for binding, and records the user name, the public key, and some basic personal information, such as "certificate materials" encrypted by the private key, on the blockchain.

FIG. 13 is a schematic flowchart of user login on a blockchain according to an embodiment of this application.

A user requests to log in to a service through an application. A service party (or a merchant) sends an identity authentication request to the user. The user generates a login credential through a signature authentication request. "Login attribute" is user identity information. If the service party verifies that the login credential is authorized, login is allowed. The service party may further require to obtain a key for decrypting personal information to obtain basic user information.

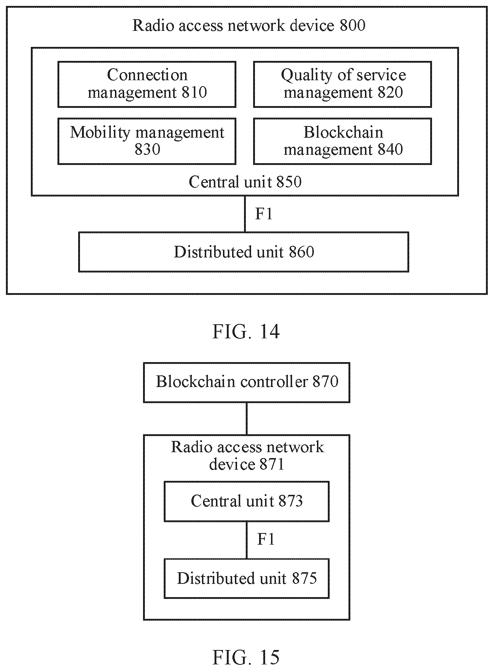

In this embodiment of this application, a blockchain controller (blockchain controller, BCC) is introduced into an architecture of an NCR and a gNB, and bidirectional authentication between the NCR and the gNB is completed by using the blockchain. For example, FIG. 14 to FIG. 16 each are a diagram of an architecture of a radio access network device into which a blockchain management function is introduced.

FIG. 14 is a diagram of an architecture of a radio access network device based on a blockchain management function according to an embodiment of this application.

In a possible architecture, the blockchain management function may be embedded in a central unit 850 of the radio access network device. For example, the central unit 850 may be a CU module of a gNB, and a distributed unit 860 may be a DU module of the gNB. The central unit 850 includes connection management 810, quality of service (quality of service, QoS) 820, mobility management 830, blockchain management 840, and other functions. The central unit 850 communicates with the distributed unit 860 through an F1 interface.

FIG. 15 is a diagram of an architecture of another radio access network device based on a blockchain management function according to an embodiment of this application.

In a possible architecture, a blockchain controller 870 may be used as an independent logical entity. For example, a central unit 873 may be a CU module of a gNB, a distributed unit 875 may be a DU module of the gNB, and the central unit 873 communicates with the distributed unit 875 through an F1 interface. The blockchain controller 870 may manage an identity of the radio access network device.

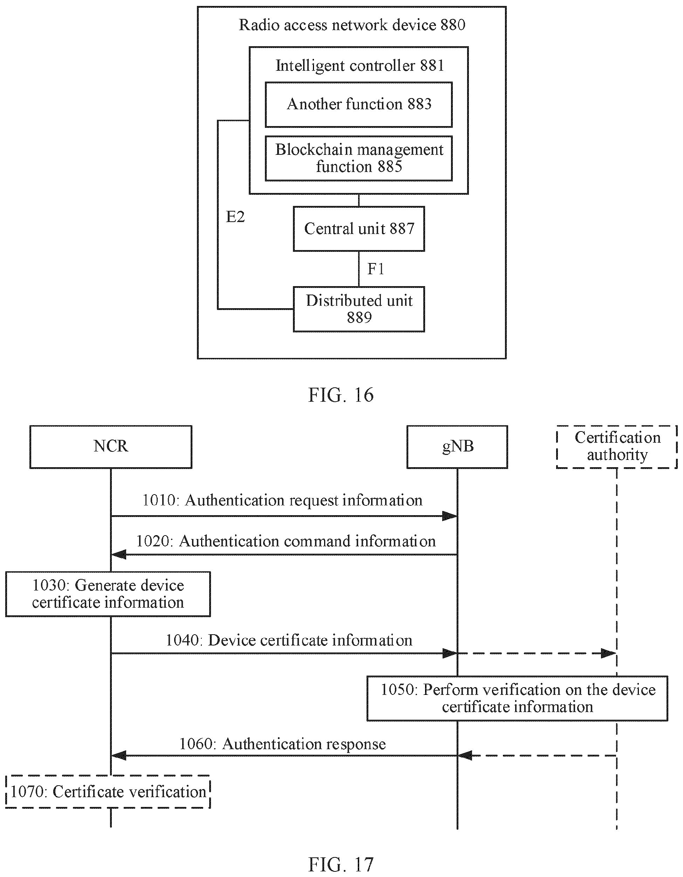

FIG. 16 is a diagram of an architecture of another radio access network device based on a blockchain management function according to an embodiment of this application.

In a possible architecture, a blockchain management function 885 may be embedded in an intelligent controller 881 of the radio access network device 880. The radio access network device 880 includes a central unit 887, a distributed unit 889, and the intelligent controller 881. For example, the central unit 887 may be a CU module of a gNB, the distributed unit 889 may be a DU module of the gNB, and the intelligent controller 881 may be an RIC. The central unit 887 communicates with the distributed unit 889 through an F1 interface, and the distributed unit 889 communicates with the intelligent controller 881 through an E2 interface. The intelligent controller 881 includes the blockchain management function 885 and another function 883.

Optionally, based on an existing RAN architecture protocol stack, a blockchain control protocol layer of a BCC may be implemented in a plurality of manners. For example, an RRC layer protocol may be reused, or a BCC protocol layer may be separately constructed and located above the RRC layer, or the BCC protocol may be constructed in parallel to the RRC layer.

For example, the BCC may be introduced into an MT module of an NCR. It should be understood that a diagram of an architecture in which the BCC is introduced into the MT module of the NCR is similar to that in each of FIG. 14 to FIG. 16. Details are not described again in this application.

The following describes in detail the authentication method shown in FIG. 11. Optionally, the RIC blockchain controller may alternatively be deployed outside the gNB, or the RIC blockchain controller may be deployed at another location. A specific deployment location of the RIC blockchain controller is not limited in this application.

910: Perform registration on a blockchain, and generate a private-public key pair.

For example, the BCC controller is introduced into the MT module of the NCR and the RIC of the gNB. It should be understood that, in the blockchain, a third-party identity provider manages and controls an identity of a user performing registration on the blockchain. The NCR and the gNB perform registration on the blockchain as clients, and generate private-public key pairs. A private key of the NCR is S1, and a public key of the NCR is S2. A private key of the gNB is G1, and a public key of the gNB is G2.

920: The NCR generates a first random number.

Optionally, the NCR may generate the first random number by using a random number generator, or may preconfigure the first random number, or may obtain the first random number from a reliable third party. A specific manner of obtaining the first random number is not limited in this application.

930: The NCR sends the first random number and an NCR identity hash value to the gNB.

For example, the NCR may send the first random number and the NCR identity hash value to the gNB. It should be understood that the NCR identity hash value may be generated when the NCR performs registration on the blockchain, and the NCR identity hash value is stored on the blockchain, that is, the NCR identity hash value may be found on the blockchain.

Optionally, the NCR may further simultaneously send the public key S2 of the NCR to the gNB.

Optionally, the first random number, the NCR identity hash value, and the public key S2 of the NCR may be used as an RIC container and carried in an RRCSetupRequest message. It should be understood that, when the first random number, the NCR identity hash value, and the NCR public key S2 are used as the RIC container, the information is readable only by the RIC.

940: The gNB confirms an NCR identity, and generates a first response number.

After receiving the first random number and the NCR identity hash value that are sent by the NCR, the gNB first performs query on the blockchain based on the NCR identity hash value, to determine whether the NCR actually exists. If the NCR identity hash value can be found on the blockchain, it indicates that the NCR actually exists. If the NCR identity hash value cannot be found on the blockchain, it indicates that the NCR does not exist.

If the NCR actually exists, the gNB may generate the first response number based on the first random number and the private key G1 of the gNB. For example, the gNB may scramble or encrypt the first random number by using G1, to obtain the first response number. The first response number is used by the NCR to perform authentication on the gNB.

950: The gNB sends the first response number and a gNB identity hash value to the NCR.

The gNB sends the first response number and the gNB identity hash value to the NCR. Optionally, the gNB may further simultaneously send the public key G2 of the gNB to the NCR.

Optionally, the first response number, the gNB identity hash value, and the public key G2 of the gNB may be used as an RIC container and carried in an RRCSetup message. It should be understood that, when the first response number, the gNB identity hash value, and the public key G2 of the gNB are used as the RIC container, the information is readable only by the RIC.

960: The NCR confirms a gNB identity, and generates a second response number.

After receiving the first response number and the gNB identity hash value that are sent by the gNB, the NCR first performs query on the blockchain based on the gNB identity hash value, to determine whether the gNB actually exists. If the gNB identity hash value can be found on the blockchain, it indicates that the gNB actually exists. If the gNB identity hash value cannot be found on the blockchain, it indicates that the gNB does not exist.

If the gNB actually exists, the NCR performs verification on the first response number by using the public key G2 of the gNB. Specifically, the NCR descrambles or decrypts the first response number by using the public key G2. If the first random number can be obtained, it indicates that the verification succeeds; otherwise, the verification fails.

If the verification fails, it is considered that the authentication on the gNB fails, the NCR rejects access to the gNB and a current cell, and adds an ID of the gNB and/or an ID of the cell to a blocklist or marks the ID of the gNB and/or the ID of the cell in historical cell information, and the NCR re-initiates an initial access procedure. It should be understood that the NCR may obtain the ID of the gNB and the ID of the cell in the random access process.

If the verification by using the public key G2 succeeds, the NCR generates the second response number based on the first response number and the private key S1 of the NCR. For example, the NCR may scramble or encrypt the first response number by using the private key S1, to obtain the second response number. The second response number is used by the gNB to perform authentication on the NCR.

970: The NCR sends the second response number to the gNB.

For example, the second response number may be carried in an RRCSetupComplete message.

Optionally, the second response number may be used as an RIC container and carried in an RRCSetupComplete message. It should be understood that, when the second response number is used as the RIC container, the information is readable only by the RIC.

980: The gNB performs verification on the second response number.

The gNB performs verification on the second response number by using the public key S2 of the NCR. Specifically, the NCR descrambles or decrypts the second response number by using the public key S2. If the first response number can be obtained, it indicates that the verification succeeds; otherwise, the verification fails.

If the verification fails, it is considered that the authentication on the NCR fails, and the gNB rejects access of the NCR, and adds an ID of the NCR to a blocklist.

If the verification by using the public key S2 succeeds, step 480 is performed.

990: The gNB sends an authentication response to the NCR.

The gNB sends the authentication response to the NCR, to notify the NCR whether the authentication succeeds, where the authentication response includes a result of performing authentication on the NCR. If the verification in step 980 succeeds, the gNB continues to perform a subsequent configuration procedure.

In this embodiment of this application, the blockchain function is introduced into the RAN architecture, to implement bidirectional authentication based on blockchain authentication, so that a security risk problem of conventional authentication can be overcome. In addition, a core network does not need to participate in an authentication process, thereby avoiding upgrade of a function of a core network element.

It should be understood that, in the foregoing embodiment, that the NCR represents a relay device and the gNB represents a radio access network device is merely an example, and should not be construed as a limitation on this application.

FIG. 17 is a schematic flowchart of another authentication method according to an embodiment of this application.

According to the method provided in this embodiment of this application, bidirectional authentication may be completed based on device certificate information of an NCR. The following execution actions of the NCR may be completed by an MT module, or may be completed by using a module that can complete the following functions. This is not limited in this application.

1010: The NCR sends authentication request information to a gNB.

The NCR sends the authentication request information to the gNB, where the authentication request information includes identity information of the NCR. For example, the authentication request information may include an ID of an NCR-MT, and the NCR-MT represents an MT module of the NCR.

Optionally, the authentication request information may be carried in an RRCSetupRequest message, or may be implemented by using private signaling of an operator and a device manufacturer.

1020: The gNB sends authentication command information to the NCR.

The gNB sends the authentication command information to the NCR, where the authentication command information may indicate an authentication manner. For example, the authentication command information may indicate that a manner of performing authentication on the NCR by the gNB is a private authentication manner or a standard authentication manner.

1030: Generate the device certificate information.

The NCR may generate or extract the device certificate information, for example, may generate a Huawei (HW) device certificate file. The device certificate information of the NCR may include a preset device certificate DevcertHW, a public key K-public of the NCR, device information ESN, and a signature of a private key K-private of the NCR on the device certificate.

1040: The NCR sends the device certificate information to the gNB.

The NCR sends the generated device certificate information to the gNB.

1050: Perform verification on the device certificate information.

After receiving the device certificate information, the gNB may obtain an NCR device root certificate of a certification authority (certification authority, CA), and then perform certificate verification and signature verification on the device certificate information of the NCR, to check consistency between the ESN and the preconfigured device certificate. Optionally, a verified certificate may be further generated.

The certificate verification means using a public key in an NCR root certificate to perform verification on the device certificate information of the NCR to determine whether the NCR and the gNB are from a same vendor, for example, using a public key in a root certificate RootcertHW to perform verification on a signature of the preset device certificate (DevcertHW) in the device certificate information of the NCR to determine that the NCR and the gNB are from HW.

The signature verification means using a public key K-public in an NCR certificate to perform verification on the signature of the NCR private key on the certificate, to determine a matching relationship between the NCR public key and private key and ensure information integrity.

Generating the verified certificate means generating a sequence number, the NCR public key K-public, the ESN, a signature of a CA private key on the verified certificate, and a CA root certificate. It should be understood that the CA root certificate may be a CA public key.

Optionally, after receiving the device certificate information, the gNB may further forward the device certificate information to the CA. The CA completes verification on the NCR device certificate and the signature, and then forwards a verification result to the gNB.

1060: The gNB sends an authentication response to the NCR.

The gNB sends the authentication response to the NCR, where the authentication response includes a CA identifier and a CA verification certificate.

1070: The NCR performs certificate verification.

The verified certificate issued by the CA or the gNB to the NCR contains a public key K-public re-generated by the NCR and the CA private key signature, and simultaneously carries information such as the CAroot certificate. The public key K-public is used by the NCR to confirm the NCR certificate. The NCR may use the public key in the CA root certificate to perform verification on the CA private key signature to determine that the certificate is authorized and perform certificate validity check.

It should be understood that, in the foregoing embodiment, that the NCR represents a relay device and the gNB represents a radio access network device is merely an example, and should not be construed as a limitation on this application.

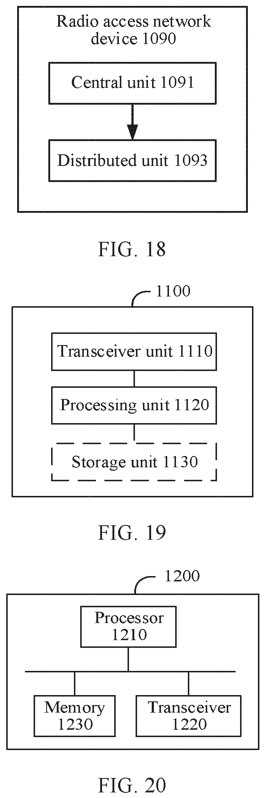

FIG. 18 is a schematic flowchart of another authentication method according to an embodiment of this application.

A radio access network device 1090 includes a central unit 1091 and a distributed unit 1093. The radio access network device first performs authentication on an NCR based on an authentication request sent by the NCR. If the authentication on the NCR succeeds, the central unit 1091 of the radio access network device needs to send indication information to the distributed unit 1093, to indicate that the device is the NCR. The indication information may be carried in an F1 interface message between the central unit 1091 and the distributed unit 1093, for example, carried in a UE context setup request message. This is because an RRC layer message carrying the NCR identity indication information is decapsulated, read, and processed by the central unit 1091, the distributed unit 1093 does not know that an accessed device is the NCR device, and subsequently the distributed unit 1093 needs to perform configuration for the NCR.

It should be understood that the radio access network device, the relay device, and the core network element in this application may also be referred to as communication apparatuses or communication devices, and may be one general-purpose device or one special-purpose device. This is not specifically limited in this application.

Optionally, related functions of the radio access network device, the relay device, and the MT module of the NCR in this application may be implemented by one device, or may be jointly implemented by a plurality of devices, or may be implemented by one or more functional modules in one device. This is not specifically limited in this application.

It may be understood that the foregoing functions may be network elements in a hardware device, software functions running on dedicated hardware, a combination of hardware and software, or virtualized functions instantiated on a platform (for example, a cloud platform).

It should be understood that, in the foregoing embodiment, that the NCR represents a relay device and the gNB represents a radio access network device is merely an example, and should not be construed as a limitation on this application.

Optionally, in addition to the NCR, a common mobile terminal may also use an authentication mechanism on a RAN side. In this way, network access procedures of a large quantity of wireless devices can be simplified, and fast authentication can be implemented. This is especially advantageous for an industrial internet of things and a large-scale sensor scenario.

The foregoing describes the authentication methods according to embodiments of this application. The following separately describes communication apparatuses according to embodiments of this application with reference to FIG. 19 and FIG. 20.

This application provides a communication apparatus, including: a transceiver unit, configured to receive authentication request information from a relay device, where the authentication request information includes identity information of the relay device. The transceiver unit is further configured to send an authentication response, where the authentication response includes a result of performing authentication on the relay device.

Optionally, in some implementations, the identity information of the relay device includes a permanent identifier of the relay device or a concealed identifier obtained by encrypting the permanent identifier.

Optionally, in some implementations, the identity information of the relay device includes any one or more of a temporary identifier and type indication information of the relay device, and the type indication information indicates that the relay device is a network-controlled repeater NCR.

Optionally, in some implementations, the authentication request information is carried in any one or more of a radio resource control setup request message and a radio resource control setup complete message in a random access process.

Optionally, in some implementations, the transceiver unit is further configured to send the authentication request information to an operations, administration and maintenance OAM functional entity, where the OAM is configured to perform identity authentication on the relay device; and the transceiver unit is further configured to receive the authentication response from the OAM.

Optionally, in some implementations, the transceiver unit is further configured to obtain an authentication key of the relay device. The communication apparatus further includes a processing unit, configured to generate first authentication information based on a first random number and the authentication key. The transceiver unit is further configured to: send the first random number to the relay device; and receive second authentication information from the relay device. The processing unit is further configured to compare the first authentication information with the second authentication information.

Optionally, if the first authentication information is consistent with the second authentication information, the radio access network device allows access of the relay device; or if the first authentication information is inconsistent with the second authentication information, the radio access network device rejects access of the relay device.

Optionally, in some implementations, the transceiver unit is further configured to obtain the authentication key of the relay device from an OAM.

Optionally, in some implementations, the processing unit is further configured to generate third authentication information based on a plurality of second random numbers and the authentication key; and the transceiver unit is further configured to send the third authentication information and the plurality of second random numbers to the relay device.

Optionally, in some implementations, the transceiver unit is further configured to receive device certificate information of the relay device; and the processing unit is further configured to perform authentication on the relay device based on the device certificate information.

Optionally, in some implementations, the transceiver unit is further used by a central unit of the radio access network device to send type indication information to a distributed unit of the radio access network device, where the type indication information indicates that the relay device is the NCR.

This application further provides a communication apparatus, including: a transceiver unit, configured to send authentication request information to a radio access network device, where the authentication request information includes identity information of the relay device. The transceiver unit is further configured to receive an authentication response, where the authentication response includes a result of performing authentication on the relay device.

Optionally, in some implementations, the identity information of the relay device includes a permanent identifier of the relay device or a concealed identifier obtained by encrypting the permanent identifier.

Optionally, in some implementations, the identity information of the relay device includes any one or more of a temporary identifier and type indication information of the relay device, and the type indication information indicates that the relay device is an NCR.

Optionally, in some implementations, the authentication request information is carried in any one or more of a radio resource control setup request message and a radio resource control setup complete message in a random access process.

Optionally, in some implementations, the transceiver unit is further configured to receive a first random number from the radio access network device. The communication apparatus further includes a processing unit, configured to generate second authentication information based on the first random number and an authentication key of the relay device. The transceiver unit is further configured to send the second authentication information to the radio access network device.

Optionally, in some implementations, the transceiver unit is further configured to receive third authentication information and a plurality of second random numbers from the radio access network device; the processing unit is further configured to generate fourth authentication information based on the plurality of second random numbers and the authentication key; and the processing unit is further configured to compare the third authentication information with the fourth authentication information.

If the third authentication information is consistent with the fourth authentication information, the authentication on the radio access network device succeeds; or if the third authentication information is inconsistent with the fourth authentication information, the authentication on the radio access network device fails.

Optionally, in some implementations, the transceiver unit is further configured to send device certificate information of the relay device to the radio access network device.

This application further provides a communication apparatus, including: a transceiver unit, configured to receive authentication request information from a relay device, where the authentication request information includes identity information of the relay device. The transceiver unit is further configured to send an authentication response to the relay device, where the authentication response includes a result of performing authentication on the relay device by the core network.

Optionally, in some implementations, the identity information of the relay device includes a permanent identifier of the relay device or a concealed identifier obtained by encrypting the permanent identifier.

Optionally, in some implementations, the identity information of the relay device includes any one or more of a temporary identifier and type indication information of the relay device, and the type indication information indicates that the relay device is an NCR.

Optionally, in some implementations, the authentication request information is carried in any one or more of a radio resource control setup request message and a radio resource control setup complete message in a random access process.

Optionally, in some implementations, if the core network device successfully authenticates the relay device, the transceiver unit is further configured to send type indication information to a radio access network device, where the type indication information indicates that the relay device is the NCR.

Optionally, in some implementations, the core network device is an AMF or an AUSF.

Optionally, in some implementations, a UDM sends the type indication information to the AMF or the AUSF.

This application further provides a communication apparatus, including: a transceiver unit, configured to send authentication request information to a core network, where the authentication request information includes identity information of the relay device. The transceiver unit is further configured to receive an authentication response, where the authentication response includes a result of performing authentication on the relay device by the core network.

Optionally, in some implementations, the identity information of the relay device includes a permanent identifier of the relay device or a concealed identifier obtained by encrypting the permanent identifier.

Optionally, in some implementations, the identity information of the relay device includes any one or more of a temporary identifier and type indication information of the relay device, and the type indication information indicates that the relay device is an NCR.

Optionally, in some implementations, the authentication request information is carried in any one or more of a radio resource control setup request message and a radio resource control setup complete message in a random access process.

This application further provides a communication apparatus, including: a transceiver unit, configured to send a first random number to a radio access network device. The transceiver unit is further configured to receive a first response number from the radio access network device. The communication apparatus further includes a processing unit, configured to perform verification on the first response number based on a public key of the radio access network device.

If the first random number can be obtained through the verification, authentication on the radio access network device succeeds; or if the first random number cannot be obtained through the verification, authentication on the radio access network device fails.

Optionally, in some implementations, the first random number is carried in a radio resource control setup request message in a random access process.

Optionally, in some implementations, the transceiver unit is further configured to send a second response number to the radio access network device, where the second response number is generated based on the first response number and a private key of the relay device; and the transceiver unit is further configured to receive an authentication response, where the authentication response includes a result of performing authentication on the relay device by the radio access network.

Optionally, in some implementations, the transceiver unit is further configured to receive a first identity hash value from the radio access network device, where the first identity hash value is an identity hash value of the radio access network device; and the processing unit is configured to determine that the first identity hash value exists in a blockchain network, where the blockchain network is used to manage identity information of the radio access network device.

Optionally, in some implementations, the transceiver unit is further configured to send a second identity hash value to the radio access network device, where the second identity hash value is an identity hash value of the relay device.

This application further provides a communication apparatus, including: a transceiver unit, configured to receive a first random number from a relay device. The transceiver unit is further configured to send a first response number to the relay device, where the first response number is generated based on a private key of the radio access network device and the first random number.

Optionally, in some implementations, the first random number is carried in a radio resource control setup request message in a random access process.

Optionally, in some implementations, the transceiver unit is further configured to receive a second response number from the relay device. The communication apparatus further includes a processing unit, configured to perform verification on the second response number based on a public key of the relay device. The transceiver unit is further configured to send an authentication response to the relay device, where the authentication response includes a result of performing authentication on the relay device by the radio access network.

If the first response number can be obtained through the verification, the radio access network device allows access of the relay device; or if the first response number cannot be obtained through the verification, the radio access network device rejects access of the relay device.

Optionally, in some implementations, the transceiver unit is further configured to send a first identity hash value to the relay device, where the first identity hash value is an identity hash value of the radio access network device.

Optionally, in some implementations, the transceiver unit is further configured to receive a second identity hash value from the relay device, where the second identity hash value is an identity hash value of the relay device; and the processing unit is further configured to determine that the second identity hash value exists in a blockchain network, where the blockchain network is used to manage identity information of the relay device.

Optionally, in some implementations, the transceiver unit is further used by a central unit of the radio access network device to send type indication information to a distributed unit of the radio access network device, where the type indication information indicates that the relay device is an NCR.

This application further provides a communication apparatus, including a transceiver unit that is used by a central unit of a radio access network device to send type indication information to a distributed unit of the radio access network device, where the type indication information indicates that a relay device accessing the radio access network device is an NCR.

FIG. 19 is a block diagram of a communication apparatus according to an embodiment of this application. As shown in the figure, the communication apparatus 1100 may include a transceiver unit 1110 and a processing unit 1120.

In a possible design, the communication apparatus 1100 may be the relay device in the foregoing method embodiments, or may be a chip configured to implement functions of the relay device in the foregoing method embodiments.

For example, the communication apparatus 1100 may be the NCR in the foregoing method embodiments, or may be a chip configured to implement functions of the NCR in the foregoing method embodiments.

It should be understood that the communication apparatus 1100 may correspond to the relay device in embodiments of this application, and the communication apparatus 1100 may include units configured to perform the methods performed by the relay device in FIG. 4, FIG. 5 to FIG. 8, FIG. 10, FIG. 11, FIG. 17, and FIG. 18. In addition, the units in the communication apparatus 1100 and the foregoing other operations and/or functions are used to implement corresponding procedures in FIG. 4, FIG. 5 to FIG. 8, FIG. 10, FIG. 11, FIG. 17, and FIG. 18.

As example descriptions, the communication apparatus 1100 can implement actions, steps, or methods related to the relay device in FIG. 4, FIG. 5 to FIG. 8, FIG. 10, FIG. 11, FIG. 17, and FIG. 18 in the foregoing method embodiments.

It should be understood that the foregoing content is merely used as an example for understanding. The communication apparatus 1100 can further implement other steps, actions, or methods related to the relay device in the foregoing method embodiments. Details are not described herein again.

It should be understood that specific processes in which the units or devices perform the foregoing corresponding steps are described in detail in the foregoing method embodiments. For brevity, details are not described herein again.

In another possible design, the communication apparatus 1100 may be the radio access network device in the foregoing method embodiments, or may be a chip configured to implement functions of the radio access network device in the foregoing method embodiments.

For example, the communication apparatus 1100 may be the gNB in the foregoing method embodiments, or may be a chip configured to implement functions of the gNB in the foregoing method embodiments.

It should be understood that the communication apparatus 1100 may include units configured to perform the methods performed by the gNB in FIG. 4, FIG. 5 to FIG. 8, FIG. 10, FIG. 11, FIG. 17, and FIG. 18. In addition, the units in the communication apparatus 1100 and the foregoing other operations and/or functions are used to implement corresponding procedures in FIG. 4, FIG. 5 to FIG. 8, FIG. 10, FIG. 11, FIG. 17, and FIG. 18. It should be understood that specific processes in which the units perform the foregoing corresponding steps are described in detail in the foregoing method embodiments. For brevity, details are not described herein again.

It should be understood that the foregoing content is merely used as an example for understanding. The communication apparatus 1100 can further implement other steps, actions, or methods related to FIG. 4, FIG. 5 to FIG. 8, FIG. 10, FIG. 11, FIG. 17, and FIG. 18 in the foregoing method embodiments. Details are not described herein again.

It should be understood that specific processes in which the apparatuses or units perform the foregoing corresponding steps are described in detail in the foregoing method embodiments. For brevity, details are not described herein again.

In another possible design, the communication apparatus 1100 may be the core network device in the foregoing method embodiments, or may be a chip configured to implement functions of the core network in the foregoing method embodiments.

It should be understood that the communication apparatus 1100 may correspond to the core network in embodiments of this application, and the communication apparatus 1100 may include units configured to perform the methods performed by the network management device or the core network device in FIG. 4 and FIG. 5. In addition, the units in the communication apparatus 1100 and the foregoing other operations and/or functions are used to implement corresponding procedures in FIG. 4 and FIG. 5. It should be understood that specific processes in which the units perform the foregoing corresponding steps are described in detail in the foregoing method embodiments. For brevity, details are not described herein again.

It should be further understood that the transceiver unit 1110 in the communication apparatus 1100 may correspond to a transceiver 1220 in a communication device 1200 shown in FIG. 20, and the processing unit 1120 in the communication apparatus 1100 may correspond to a processor 1210 in the communication device 1200 shown in FIG. 20.

It should be further understood that, when the communication apparatus 1100 is a chip, the chip includes a transceiver unit and a processing unit. The transceiver unit may be an input/output circuit or a communication interface. The processing unit may be a processor, a microprocessor, or an integrated circuit integrated on the chip.

The transceiver unit 1110 is configured to implement signal receiving and sending operations of the communication apparatus 1100, and the processing unit 1120 is configured to implement a signal processing operation of the communication apparatus 1100.

Optionally, the communication apparatus 1100 further includes a storage unit 1130, and the storage unit 1130 is configured to store instructions.

FIG. 20 is a block diagram of a communication device according to an embodiment of this application. As shown in the figure, the communication device 1200 includes at least one processor 1210 and a transceiver 1220. The processor 1210 is coupled to a memory, and is configured to execute instructions stored in the memory, to control the transceiver 1220 to send a signal and/or receive a signal. Optionally, the communication device 1200 further includes a memory 1230, configured to store instructions.

It should be understood that the processor 1210 and the memory 1230 may be integrated into one processing apparatus. The processor 1210 is configured to execute program code stored in the memory 1230, to implement the foregoing functions. During specific implementation, the memory 1230 may alternatively be integrated into the processor 1210, or may be independent of the processor 1210.

It should be further understood that the transceiver 1220 may include a receiver (which is also referred to as a receiver machine) and a transmitter (which is also referred to as a transmitter machine). The transceiver 1220 may further include an antenna. There may be one or more antennas. The transceiver 1220 may alternatively be a communication interface or an interface circuit.

When the communication device 1200 is a chip, the chip includes a transceiver unit and a processing unit. The transceiver unit may be an input/output circuit or a communication interface. The processing unit may be a processor, a microprocessor, or an integrated circuit integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP) circuit, a microcontroller unit (microcontroller unit, MCU), a programmable controller (programmable logic device, PLD), or another integrated chip.

In an implementation process, steps of the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the methods performed by the relay device in the foregoing method embodiments.

For example, when the computer program is executed by a computer, the computer is enabled to implement the methods performed by the relay device in the foregoing method embodiments.

An embodiment of this application further provides a computer-readable storage medium. The computer-readable storage medium stores computer instructions used to implement the methods performed by the radio access network device in the foregoing method embodiments.

For example, when the computer program is executed by a computer, the computer is enabled to implement the methods performed by the radio access network device in the foregoing method embodiments.

An embodiment of this application further provides a computer-readable storage medium. The computer-readable storage medium stores computer instructions used to implement the methods performed by the core network device in the foregoing method embodiments.

For example, when the computer program is executed by a computer, the computer is enabled to implement the methods performed by the core network device in the foregoing method embodiments.

An embodiment of this application further provides a computer program product including instructions. When the instructions are executed by a computer, the computer is enabled to implement the methods performed by the relay device in the foregoing method embodiments.

An embodiment of this application further provides a communication system. The communication system includes a relay device and a radio access network device. The relay device is configured to perform the steps of the methods performed by the relay device in the foregoing method embodiments, and the radio access network device is configured to perform the steps of the methods performed by the radio access network device in the foregoing method embodiments.

Optionally, the communication system may further include a core network device, and the core network device is configured to perform the steps of the methods performed by the core network device in the foregoing method embodiments.

It may be clearly understood by a person skilled in the art that, for convenient and brief description, for explanations and beneficial effects of related content in any one of the communication apparatuses provided above, refer to the corresponding method embodiment provided above. Details are not described herein again.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be executed by a relay device or a radio access network device, or a functional module that is in the relay device or the radio access network device and that can invoke and execute a program.

Various aspects or features of this application may be implemented as methods, apparatuses, or products using standard programming and/or engineering techniques. As used in this specification, a term "artificial article" may encompass a computer program accessible from any computer-readable device, carrier, or medium.

The computer-readable storage medium may be any usable medium accessible by a computer, or a data storage device, for example, a server or a data center, integrating one or more usable media. The usable medium (or the computer-readable medium) may include, for example, but is not limited to, various media that can store program code such as a magnetic medium or a magnetic storage device (for example, a floppy disk, a hard disk drive (for example, a removable hard disk drive), or a magnetic tape), an optical medium (for example, an optical disc, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

Various storage media described in this specification may indicate one or more devices and/or other machine-readable media that are configured to store information. The term "machine-readable medium" may include but is not limited to: radio channels and various other media capable of storing, containing, and/or carrying instructions and/or data.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these memories and any memory of another proper type.

In several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. For the computer-readable storage medium, refer to the foregoing descriptions.

It should be understood that, in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

It should be further understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, comprising:
receiving, by a radio access network device, authentication request information from a relay device, wherein the authentication request information comprises identity information of the relay device; and
sending, by the radio access network device, an authentication response, wherein the authentication response comprises a result of performing authentication on the relay device.

2. The method according to claim 1, wherein the identity information of the relay device comprises a permanent identifier of the relay device or a concealed identifier obtained by encrypting the permanent identifier.

3. The method according to claim 1 or 2, wherein the identity information of the relay device comprises any one or more of a temporary identifier and type indication information of the relay device, and the type indication information indicates that the relay device is a network-controlled repeater NCR.

4. The method according to any one of claims 1 to 3, wherein the authentication request information is carried in any one or more of a radio resource control RRC setup request message and a radio resource control RRC setup complete message in a random access process.

5. The method according to claim 1 or 3, wherein before the sending, by the radio access network device, an authentication response, the method further comprises:
sending, by the radio access network device, the authentication request information to an operations, administration and maintenance OAM functional entity; and
receiving, by the radio access network device, the authentication response from the OAM.

6. The method according to claim 1 or 2, wherein the method further comprises:
obtaining, by the radio access network device, an authentication key of the relay device;
generating, by the radio access network device, first authentication information based on a first random number and the authentication key;
sending, by the radio access network device, the first random number to the relay device;
receiving, by the radio access network device, second authentication information from the relay device; and
comparing, by the radio access network device, the first authentication information with the second authentication information.

7. The method according to claim 6, comprising:
if the first authentication information is consistent with the second authentication information, allowing, by the radio access network device, access of the relay device; or
if the first authentication information is inconsistent with the second authentication information, rejecting, by the radio access network device, access of the relay device.

8. The method according to claim 6 or 7, wherein the obtaining, by the radio access network device, an authentication key of the relay device comprises:
obtaining, by the radio access network device, the authentication key of the relay device from an operations, administration and maintenance OAM functional entity.

9. The method according to any one of claims 6 to 8, wherein the method further comprises:
generating, by the radio access network device, third authentication information based on a plurality of second random numbers and the authentication key; and
sending, by the radio access network device, the third authentication information and the plurality of second random numbers to the relay device.

10. The method according to claim 1 or 3, wherein the method further comprises:
obtaining, by the radio access network device, device certificate information of the relay device; and
performing, by the radio access network device, authentication on the relay device based on the device certificate information.

11. The method according to any one of claims 1 to 10, wherein the method further comprises:
sending, by a central unit CU of the radio access network device, type indication information to a distributed unit DU of the radio access network device, wherein the type indication information indicates that the relay device is the network-controlled repeater NCR.

12. An authentication method, comprising:
sending, by a relay device, authentication request information to a radio access network device, wherein the authentication request information comprises identity information of the relay device; and
receiving, by the relay device, an authentication response, wherein the authentication response comprises a result of performing authentication on the relay device.

13. The method according to claim 12, wherein the identity information of the relay device comprises a permanent identifier of the relay device or a concealed identifier obtained by encrypting the permanent identifier.

14. The method according to claim 12 or 13, wherein the identity information of the relay device comprises any one or more of a temporary identifier and type indication information of the relay device, and the type indication information indicates that the relay device is a network-controlled repeater NCR.

15. The method according to any one of claims 12 to 14, wherein the authentication request information is carried in any one or more of a radio resource control RRC setup request message and a radio resource control RRC setup complete message in a random access process.

16. The method according to claim 12 or 14, wherein the method further comprises:
receiving, by the relay device, a first random number from the radio access network device;
generating, by the relay device, second authentication information based on the first random number and an authentication key of the relay device; and
sending, by the relay device, the second authentication information to the radio access network device.

17. The method according to claim 16, wherein the method further comprises:
receiving, by the relay device, third authentication information and a plurality of second random numbers from the radio access network device;
generating, by the relay device, fourth authentication information based on the plurality of second random numbers and the authentication key; and
comparing, by the relay device, the third authentication information with the fourth authentication information.

18. The method according to claim 17, comprising:
if the third authentication information is consistent with the fourth authentication information, succeeding in the authentication on the radio access network device; or
if the third authentication information is inconsistent with the fourth authentication information, failing in the authentication on the radio access network device.

19. The method according to claim 12 or 14, wherein the method further comprises:
sending, by the relay device, device certificate information of the relay device to the radio access network device.

20. An authentication method, comprising:
receiving, by a core network device, authentication request information from a relay device, wherein the authentication request information comprises identity information of the relay device, the identity information of the relay device comprises any one or more of a temporary identifier and type indication information of the relay device, and the type indication information indicates that the relay device is a network-controlled repeater NCR; and
sending, by the core network device, an authentication response to the relay device, wherein the authentication response comprises a result of performing authentication on the relay device by the core network device.

21. The method according to claim 20, wherein the identity information of the relay device comprises a permanent identifier of the relay device or a concealed identifier obtained by encrypting the permanent identifier.

22. The method according to claim 20 or 21, wherein the authentication request information is carried in any one or more of a radio resource control RRC setup request message and a radio resource control RRC setup complete message in a random access process.

23. The method according to any one of claims 20 to 22, wherein the method further comprises:
if the core network device successfully authenticates the relay device, sending, by the core network device, type indication information to a radio access network device, wherein the type indication information indicates that the relay device is the network-controlled repeater NCR.

24. The method according to claim 23, wherein the core network device is an access and mobility management function AMF network element or an authentication server function AUSF network element.

25. The method according to claim 24, wherein the method further comprises:
sending, by a unified data management UDM network element, the type indication information to the AMF or the AUSF.

26. An authentication method, comprising:
sending, by a relay device, authentication request information to a core network device, wherein the authentication request information comprises identity information of the relay device, the identity information of the relay device comprises any one or more of a temporary identifier and type indication information of the relay device, and the type indication information indicates that the relay device is a network-controlled repeater NCR; and
receiving, by the relay device, an authentication response, wherein the authentication response comprises a result of performing authentication on the relay device by the core network device.

27. The method according to claim 26, wherein the identity information of the relay device comprises a permanent identifier of the relay device or a concealed identifier obtained by encrypting the permanent identifier.

28. The method according to claim 26 or 27, wherein the authentication request information is carried in any one or more of a radio resource control RRC setup request message and a radio resource control RRC setup complete message in a random access process.

29. A communication apparatus, comprising at least one processor, wherein the at least one processor is configured to execute a computer program stored in a memory, so that the apparatus implements the method according to any one of claims 1 to 28.

30. A computer-readable storage medium, storing a computer program or instructions, wherein the computer program or the instructions are used to implement the method according to any one of claims 1 to 28.
